(19) Europäisches Patentamt
European Patent Office
Office européen des brevets

(11) Veröffentlichungsnummer : **0 281 521 B1**

(12) **EUROPÄISCHE PATENTSCHRIFT**

(45) Veröffentlichungstag der Patentschrift :
**08.07.92 Patentblatt 92/28**

(21) Anmeldenummer : **88810125.0**

(22) Anmeldetag : **29.02.88**

(51) Int. Cl.5 : **A01N 25/28,** A01N 37/18, A01N 37/22, A01N 37/26, // (A01N37/26, 37:18), (A01N37/22, 37:18)

# (54) Herbizide Zusammensetzungen.

(30) Priorität : **06.03.87 CH 849/87**

(43) Veröffentlichungstag der Anmeldung :
**07.09.88 Patentblatt 88/36**

(45) Bekanntmachung des Hinweises auf die Patenterteilung :
**08.07.92 Patentblatt 92/28**

(84) Benannte Vertragsstaaten :
**AT BE CH DE ES FR GB GR IT LI LU NL SE**

(56) Entgegenhaltungen :
**EP-A- 0 013 429**
**EP-A- 0 165 227**

(73) Patentinhaber : **CIBA-GEIGY AG**
**Klybeckstrasse 141**
**CH-4002 Basel (CH)**

(72) Erfinder : **Hässlin, Hans Walter, Dr.**
**Hebelstrasse 9A**
**W-7889 Grenzach-Wyhlen 1 (DE)**
Erfinder : **Iwanzik, Wolfgang Paul, Dr.**
**Bodenackerstrasse 7 C**
**CH-4334 Sisseln (CH)**

EP 0 281 521 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft herbizide Zusammensetzungen in Form von wässrigen Suspensionen von Mikrokapseln, die ein herbizid wirksames N-Chloracetylcyclohexenamin oder eine Mischung eines herbizid wirksamen N-Chloracetylcyclohexenamins und eines herbizid wirksamen Chloracetanilids einschliessen.

Herbizid wirksame N-Chloracetylcyclohexenamine sind aus der U.S. Patentschrift 4,351,667 und der Europäischen Patentschrift EP-A-0 113 030 bekannt. In üblichen Formulierungen, wie z.B. einem emulgierbaren Konzentrat, zeigen diese Verbindungen zwar eine gute Initialwirkung, ihre Dauerwirkung ist jedoch unbefriedigend.

Herbizid wirksame Halogenacetanilide sind aus R. Wegler, Chemie der Pflanzenschutz- und Schädlingsbekämpfungsmittel, Vol. 8, Springer Verlag, Heidelberg-New York, 1982, Seiten 90-93 und 322-327 bekannt. Als Vertreter dieser Stoffklasse, die wirtschaftliche Bedeutung erlangt haben, sind insbesondere N-Chloracetyl-N-(2-methoxy-1-methylethyl)-2-äthyl-6-methylanilin (Metolachlor) und N-Chloracetyl-N-methoxymethyl-2,6-diethylanilin (Alachlor) zu nennen.

Es ist bekannt, die Langzeitwirkung von Wirkstoffen durch Anwendung spezieller Formulierungstechniken zu verbessern. Z.B. können Aktivsubstanzen an porösen Trägern absorbiert werden, welche den Wirkstoff nach dem Ausbringen des Mittels langsam abgeben. Ferner ist bekannt, Aktivsubstanzen in Mikrokapseln mit einer Kapselwand aus polymerem Material, z.B. Polyharnstoff, einzuschliessen. Aus diesen Mikrokapseln wird die Aktivsubstanz durch Diffusion durch die Kapselwand langsam abgegeben. Dabei kann die Geschwindigkeit der Abgabe der Wirksubstanz durch die Dicke der Kapselwand und durch Wahl eines geeigneten wandbildenden Materials beeinflusst werden. Diese Technik der Mikroenkapsulierung ist allgemein geeignet um eine zufriedenstellende Langzeitwirkung einer Aktivsubstanz sicherzustellen. Dabei muss jedoch nach allgemeiner Erfahrung ein beträchtlicher und in manchen Fällen drastischer Verlust an Initialwirkung in Kauf genommen werden. Dies trifft insbesondere für Halogenacetanilide zu, welche nach Enkapsulierung in Mikrokapseln mit einer Kapselwand aus Polyharnstoff lediglich eine schwache Initialwirkung zeigen.

Es ist das Ziel der vorliegenden Erfindung, herbizide Zusammensetzungen bereit zustellen, die ein herbizid wirksames N-Chloracetylcyclohexenamin als Aktivsubstanz enthalten und die eine zufriedenstellende Initial- und Dauerwirkung haben.

Es wurde gefunden, dass N-Chloracetylcyclohexenamine nach Enkapsulierung in Mikrokapseln mit einer Kapselwand aus Polyharnstoff sowohl eine zufriedenstellende Initialwirkung als auch eine zufriedenstellende Dauerwirkung besitzen, die derjenigen von anderen, ein herbizid wirksames N-Chloracetylcyclohexenamin enthaltende Formulierungen, wie z.B. emulgierbaren Konzentraten und benetzbaren Pulvern, überlegen ist.

Gegenstand der vorliegenden Erfindung sind daher herbizide Zusammensetzungen in Form einer wässrigen Suspension von Mikrokapseln mit einer Kapselwand aus Polyharnstoff, die ein herbizid wirksames N-Chloracetylcyclohexenamin der Formel I

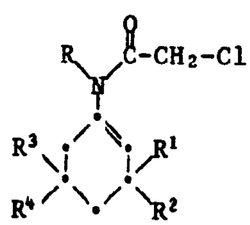

(I),

in welcher R $C_1$-$C_6$-Alkyl oder $C_3$-$C_6$-Alkenyl und $R^1$, $R^2$, $R^3$ und $R^4$ unabhängig voneinander Wasserstoff oder $C_1$-$C_4$-Alkyl bedeuten, einschliessen.

Bevorzugte N-Chloracetylcyclohexenamine der Formel I sind solche, in welchen R $C_1$-$C_4$-Alkyl oder $C_3$-$C_6$-Alkenyl und $R^1$, $R^2$, $R^3$ und $R^4$ unabhängig voneinander Wasserstoff oder Methyl bedeuten.

Besonders bevorzugte N-Chloracetylcyclohexenamine der Formel I:
N-Isopropyl-N-chloracetylcyclohex-1-enamin,
N-Isopropyl-N-chloracetyl-3(5)-methylcyclohex-1-enamin,
N-Isopropyl-N-chloracetyl-3,5,5(3)-trimethylcyclohex-1-enamin (Trimexachlor) und
N-Isopropyl-N-chloracetyl-3,3,5,5-tetramethylcyclohex-1-enamin.

Ein ganz besonders bevorzugtes N-Chloracetylcyclohexenamin der Formel I ist Trimexachlor.

Wenn die in 3- und 5-Stellung des Cyclohexenrings gebundenen Substituentenpaare $R^1$/$R^2$ und $R^3$/$R^4$ verschiedene Bedeutung haben, können die Verbindungen der Formel I in zwei isomeren Formen vorliegen, die gemäss nachstehendem Formelschema miteinander im Gleichgewicht stehen:

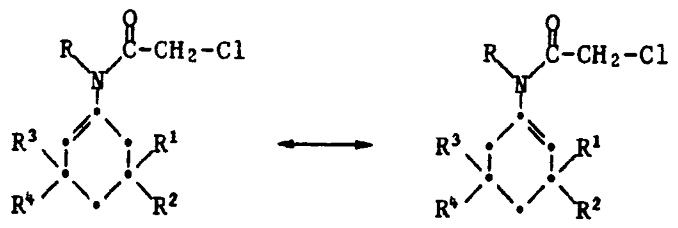

(I) (I')

Die vorliegende Erfindung umfasst neben den Isomeren der Formeln I und I′ auch alle übrigen durch die Struktur der Substituenten R, $R^1$, $R^2$, $R^3$ und $R^4$ bedingten Isomeren, wie optische Isomere und cis/trans-Isomere.

In der obigen Definition der Formel I bedeutet $C_1$-$C_6$-Alkyl im einzelnen Methyl, Ethyl, n-Propyl, Isopropyl, n-Butyl, Isobutyl, sek.-Butyl, tert.-Butyl, sowie die Isomeren Pentyl- und Hexylradikale.

Unter $C_3$-$C_6$-Alkenyl sind die über ein gesättigtes Kohlenstoffatom ($sp^3$-Zentrum) gebundenen Alkylgruppen zu verstehen. Bevorzugte Alkenylgruppen sind Allyl, Methallyl und 2-Butenyl.

Wässrige Suspensionen von Mikrokapseln mit einer Kapselwand aus Polyharnstoff, die eine flüssige, in Wasser schwer lösliche oder unlösliche Substanz einschliessen, können in bekannter Weise durch Auflösen eines Polyisocyanats in der einzukapselnden flüssigen Substanz, Dispergieren der so erhaltenen Lösung in Wasser und Umsetzung der Dispersion mit der wässrigen Lösung eines Polyamins hergestellt werden. In einem derartigen Verfahren wird die Kapselwand durch Reaktion des in der dispersen oder organischen Phase gelösten Polyisocyanats mit dem in der wässrigen Phase vorhandenen Polyamin in der Phasengrenzfläche gebildet. Das Dispergieren der Lösung des Polyisocyanats in der einzukapselnden Substanz wird in der Regel in Gegenwart eines oder mehrerer Dispergiermittel, wie Polyvinylalkohol, Gelatine und Methylcellulose (vgl. US-Patentschrift 3,577,515) Salzen von Ligninsulfonsäure (vgl. US-Patentschriften 4,280,833 und 4,417,916) oder eine Kombination von Dispergiermitteln, z.B. eine Kombination eines anionischen Dispergiermittels, wie z.B. eines Salzes einer Polystyrolsulfonsäure, eines Salzes einer Polyvinylsulfonsäure, eines Salzes eines Kondensationsprodukts von Naphthalinsulfonsäure mit Formaldehyd oder eines Salzes eines Kondensationsprodukts von Naphthalinsulfonsäure mit Phenolsulfonsäure und Formaldehyd mit einem nichtionischen Dispergiermittel, wie z.B. Polyvinylalkohol, Polyvinylmethylether, Polyvinylpyrrolidon, Hydroxyethylcellulose, Hydroxypropylcellulose, Methylcellulose Alkylpolyethylenglykolethern, Alkylphenolpolyglykolethern, Styrylphenolpolyglykolethern, Polyethylenoxiden und Polyethylenoxid-Polypropylenoxid-Blockpolymeren (vgl. US-Patentanmeldung Nr. 776, 080, eingereicht am 13. September 1985, oder die entsprechende Europäische Patentanmeldung EP-A-0 214 936) durchgeführt. Die in den vorgenannten Literaturstellen beschriebenen Verfahren sind nicht auf die Enkapsulierung flüssiger Substanzen beschränkt. Feste Substanzen können als Lösungen in einem geeigneten, mit Wasser nicht mischbaren Lösungsmittel verkapselt werden.

Die wässrigen Suspensionen von Mikrokapseln gemäss vorliegender Erfindung können nach den in den vorgenannten Literaturstellen beschriebenen Verfahren hergestellt werden. Feste N-Chloracetylcyclohexenamine der Formel I, z.B. Trimexachlor, können vorteilhaft als Lösungen in einem mit Wasser nicht mischbaren Lösungsmittel verkapselt werden. In vielen Fällen kann das als reaktive Komponente zur Bildung der Kapselwand verwendete Polyisocyanat als Lösungsmittel dienen, das zusammen mit dem festen N-Chloracetylcyclohexenamin der Formel I eine Flüssigkeit bildet, die in Wasser dispergiert und anschliessend mit einem Polyamin umgesetzt werden kann. Vorzugsweise werden jedoch feste N-Chloracetylcyclohexenamine der Formel I als Lösungen in einem mit Wasser nicht mischbaren Lösungsmittel, beispielsweise einem aliphatischen oder aromatischen Kohlenwasserstoff, einem cyclischen Keton oder einem halogenierten Kohlenwasserstoff, verkapselt. Für diesen Zweck geeignete mit Wasser nicht mischbare Lösungsmittel sind beispielsweise Hexan, Cyclohexan, Benzol, Toluol, Xylol, Mineralöl, Kerosin, Cyclohexanon, Methylenchlorid, Chloroform, Chlorbenzol und o-Dichlorbenzol. Mischungen von mono- und polyalkylierten aromatischen Kohlenwasserstoffen, die unter der Bezeichnung SHELLSOL® im Handel erhältlich sind, sind ebenfalls geeignet. Die Verwendung dieser Lösungsmittel ist auch dann vorteilhaft, wenn das Polyisocyanat in der einzukapselnden Substanz unlöslich oder schwer löslich ist. Ferner kann durch die Verwendung eines mit Wasser nicht mischbaren Lösungsmittels die Diffusiongeschwindigkeit des Wirkstoffs durch die Kapselwand beeinflusst werden. Ausserdem wirkt das Lösungsmittel als Kälteschutz. In der Regel werden 0,25-0,75 Gewichtsteile Lösungsmittel pro Gewichtsteil N-Chloracetylcyclohexenamin der Formel I verwendet.

Ausser den vorgenannten Nachteilen ist die Verwendung eines zusätzlichen Lösungsmittels auch mit einem gewissen Nachteil behaftet, da das Lösungsmittel stets zusammen mit der Aktivsubstanz verkapselt wird, und deshalb die Menge an Aktivsubstanz reduziert, die in einer Kapsel von vorgegebener Grösse eingekapselt werden kann. Es wurde nun gefunden, dass das für die Einkapselung von festen N-Chloracetylcyclohexehaminen der Formel I verwendete Lösungsmittel ganz oder teilweise durch ein herbizid wirksames Halogenacetanilid ersetzt werden kann.

Der Gegenstand vorliegender Erfindung umfasst daher auch herbizide Mittel in Form von wässrigen Suspensionen von Mikrokapseln mit einer Kapselwand aus Polyharnstoff, die eine Mischung eines herbizid wirksamen N-Chloracetylcyclohexenamins der Formel I

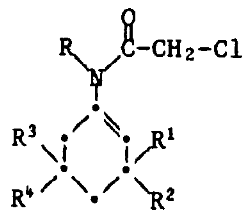

(I),

in welcher R $C_1$-$C_6$-Alkyl oder $C_3$-$C_6$-Alkenyl und $R^1$, $R^2$, $R^3$ und $R^4$ unabhängig voneinander Wasserstoff oder $C_1$-$C_4$-Alkyl bedeuten, mit einem herbizid wirksamen Chloracetanilid der Formel II

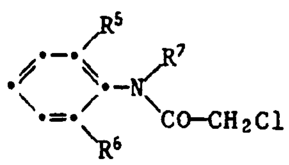

(II)

in welcher $R^5$ und $R^6$ unabhängig voneinander für Wasserstoff, Methyl oder Ethyl stehen und $R^7$ $C_1$-$C_4$-Alkoxymethyl, 2-($C_1$-$C_4$-Alkoxy)-ethyl oder 2-($C_1$-$C_4$-Alkoxy)-1-methylethyl bedeutet, wobei das Gewichtsverhältnis des N-Chloracetylcyclohexenamins der Formel I zu dem Chloracetanilid der Formel II im Bereich von 2:1 bis 1:2 liegt.

Vorzugsweise beträgt das Gewichtsverhältnis des N-Chloracetcyclohexenamins der Formel I zu dem Chloracetanilid der Formel II etwa 1:1.

Geeignete Chloracetanilide der Formel II sind:
N-Chloracetyl-N-ethoxymethyl-2-ethyl-6-methylanilin,
N-Chloracetyl-N-methoxymethyl-2.6-diethylanilin (Alachlor),
N-Chloracetyl-N-(2-methoxyethyl)-2.6-dimethylanilin (Dimethachlor),
N-Chloracetyl-N-(2-n-propoxyethyl)-2.6-dimethylanilin,
N-Chloracetyl-N-(2-isopropoxyethyl)-2.6-dimethylanilin,
N-Chloracetyl-N-(2-methoxyethyl)-2-ethyl-6-methylanilin,
N-Chloracetyl-N-(methoxyethyl)-2.6-diethylanilin,
N-Chloracetyl-N-(2-ethoxyethyl)-2-ethyl-6-methylanilin,
N-Chloracetyl-N-(2-methoxy-1-methylethyl)-2-methylanilin,
N-Chloracetyl-N-(2-methoxy-1-methylethyl)-2.6-dimethylanilin,
N-Chloracetyl-N-(2-methoxy-1-methylethyl)-2.6-diethylanilin,
N-Chloracetyl-N-(2-methoxy-1-methylethyl)-2-ethyl-6-methylanilin (Metolachlor),
N-Chloracetyl-N-(2-ethoxyethyl)-2.6-diethylanilin,
N-Chloracetyl-N-(2-n-propoxyethyl)-2-ethyl-6-methylanilin,
N-Chloracetyl-N-(2-propoxyethyl)-2.6-diethylanilin,
N-Chloracetyl-N-(2-isopropoxyethyl)-2-ethyl-6-methylanilin,
N-Chloracetyl-N-(2-ethoxyethyl)-2-methylanilin,
2-Chloracetyl-N-(2-methoxyethyl)-2-methylanilin,
N-Chloracetyl-N-(2-methoxy-2-methylethyl)-2.6-dimethylanilin,
N-Chloracetyl-N-(1-ethyl-2-methoxyethyl)-2.6-dimethylanilin,
N-Chloracetyl-N-(2-ethoxyethyl-1-methylethyl)-2.6-dimethylanilin,
N-Chloracetyl-N-(2-methoxyethyl)-2-chlor-6-methylanilin,
N-Chloracetyl-N-(2-ethoxyethyl)-2-chlor-6-methylanilin,
N-(n-Butoxymethyl)-N-chloracetyl-2.6-diethylanilin und
N-(2-n-Butoxyethyl)-N-chloracetyl-2.6-diethylanilin.

Bevorzugte Chloracetanilide der Formel II sind diejenigen, die beim innigen Vermischen mit einem N-Chloracetylcyclohexenamin der Formel I flüssige Mischungen bilden. Besonders bevorzugt sind Chloracetanilide der Formel II, die bei normaler Temperatur flüssig sind. Eine ganz besonders bevorzugte Verbindung dieser Art ist Metolachlor. Durch die Verwendung von Chloracetaniliden der Formel II, die beim innigen Vermischen mit einem N-Chloracetylcyclohexenamin der Formel I flüssige Mischungen bilden oder von flüssigen Chloracetaniliden der Formel II ist kein zusätzliches Lösungsmittel erforderlich. Bei Verwendung von festen Chloracetaniliden der Formel II kann die Menge an Lösungsmittel beträchtlich reduziert werden. Auf diese Weise ist es möglich, Mikrokapseln herzustellen, die eine erhöhte Menge an Aktivsubstanz einschliessen.

Bevorzugte herbizide Zusammensetzungen sind gemäss vorliegender Erfindung wässrige Suspensionen von Mikrokapseln mit einer Kapselwand aus Polyharnstoff, die eine Mischung von N-Isopropyl-N-chloracetyl-3,5,5(3)-trimethylcyclohex-1-enamin (Trimexachlor) und N-Chloracetyl-N-(2-methoxy-1-methylethyl)-2-ethyl-6-methylanilin (Metolachlor) einschliessen.

Die wässrigen Suspensionen von Mikrokapseln gemäss vorliegender Erfindung werden durch Auflösen des Polyisocyanats in einem N-Chloracetylcyclohexenamin der Formel I oder in einer Mischung eines N-Chloracetylcyclohexenamins der Formel I mit einem Chloracetanilid der Formel II, Dispergieren der so erhaltenen Lösung in Wasser in Gegenwart eines oder mehrerer Dispergiermittel und Umsetzung der Dispersion mit einer wässrigen Lösung eines Polyamins erhalten. Dabei kann das Auflösen des Polyisocyanats gegebenenfalls auch in einer Lösung eines N-Chloracetylcyclohexenamins der Fomel I oder einer Mischung N-Chloracetylcyclohexenamins der Formel I mit einem Chloracetanilid der Formel II in einem mit Wasser nicht mischbaren Lösungsmittel der vorgenannten Art erfolgen.

Geeignete Polyisocyanaten sind allgemein solche Verbindungen, die zwei und mehr Isocyanatgruppen im Molekül enthalten. Bevorzugt sind Di- und Triisocyanate, wobei die Isocyanatgruppen an einen aliphatischen oder einen aromatischen Grundkörper gebunden sein können. Beispiele für geeignete aliphatische Diisocyanate sind Tetramethylendiisocyanat, Pentamethylendiisocyanat und Hexamethylendiisocyanat. Geeignete aromatische Isocyanate sind Toluylendiisocyanat TDI; Mischung aus 2,4- und 2,6-Isomeren), Diphenylmethan-4,4′-diisocyanat (MDI; DESMODUR® VL (Bayer)), (Polymethylenpolyphenylisocyanat (MONDUR® MR (Mobay Chemical Company)); PAPI®, PAPI® 135 (Upjohn Co)), 2,4,4′-Diphenylläthertriisocyanat, 3,3′-Dimethyl-4,4′-diphenyldiisocyanat, 3,3′-Dimethoxy-4,4′-diphenyldiisocyanat, 1,5-Naphthylendiisocyanat und 4,4′,4″-Triphenylmethantriisocyanat. Ein weiteres geeignetes Diisocyanat ist Isophorondiisocyanat. Ferner sind auch Additionsprodukte von Diisocyanaten an mehrwertige Alkohole, wie Aethylenglykol, Glycerin und Trimethylolpropan geeignet, wobei pro Mol mehrwertiger Alkohol jeweils eine der Zahl der Hydroxygruppen des jeweiligen Alkohols entsprechende Zahl von Molen Diisocyanat addiert werden. Auf diese Weise werden mehrere Moleküle Diisocyanat über Urethangruppen an den mehrwertigen Alkohol unter Bildung von höhermolekularen Polyisocyanaten gebunden. Ein besonders geeignetes Produkt dieser Art ist durch Umsetzung von 3 Mol Toluylendiisocyanat mit einem Mol 2-Aethylglycerin (1,1-bis-Methylolpropanol) herstellbar (DESMODUR® L). Weitere geeignete Produkte werden durch Addition von Hexamethylendiisocyanat oder Isophorondiisocyanat an Aethylenglykol oder Glycerin erhalten. Bevorzugte Polyisocyanate sind Diphenylmethan-4,4′-diisocyanat und Polymethylenpolyphenylisocyanat.

Die vorgenannten Di- und Triisocyanate können jeweils einzeln oder als Mischungen von zwei und mehreren dieser Isocyanate verwendet werden.

Geeignete Polyamine sind allgemein solche Verbindungen, die zwei und mehr Aminogruppen im Molekül enthalten, wobei diese Aminogruppen an aliphatische und aromatische Grundkörper gebunden sein können. Geeignete aliphatische Polyamine sind beispielsweise α,ω-Diamine der Formel

$$H_2N-[CH_2]_n-NH_2$$

in welcher n eine ganze Zahl von 2-6 bedeutet. Als Beispiele für solche Diamine seien Aethylendiamin, Propylen-1,3-diamin, Tetramethylendiamin, Pentamethylendiamin und Hexamethylendiamin genannt. Ein bevorzugtes Diamin ist Hexamethylendiamin.

Weitere geeignete aliphatische Polyamine sind Polyäthylenimine der Formel

$$H_2N-[CH_2-CH_2-NH]_n-H$$

worin n eine ganze Zahl von 2-5 bedeutet. Als Beispiele für solche Polyäthylenimine seien Diäthylentriamin,

Triäthylentetramin, Tetraäthylenpentamin, Pentaäthylenhexamin genannt.

Weitere geeignete aliphatische Polyamine sind Dioxaalkan-α,ω-diamine, wie das 4,9-Dioxadodecan-1,12-diamin der Formel

$$H_2N-[CH_2]_3-O-[CH_2]_4-O-[CH_2]_3-NH_2 \quad .$$

Geeignete aromatische Polyamine sind beispielsweise 1,3-Phenylendiamin, 2,4-Toluylendiamin, 4,4′-Diaminodiphenylmethan, 1,5-Diaminonaphthalin, 1,3,5-Triaminobenzol, 2,4,6-Triaminotoluol, 1,3,6-Triaminonaphthalin, 2,4,4′-Triaminodiphenyläther, 3,4,5-Triamino-1,2,4-triazol und 1,4,5,8-Tetraaminoanthrachinon. Diejenigen der vorgenannten Polyamine, die nicht oder nicht genügend wasserlöslich sind, können als Hydrochloride eingesetzt werden.

Weiterhin sind Polyamine geeignet, die neben den Aminogruppen Sulfogruppen oder Carboxylgruppen enthalten. Beispiele für solche Polyamine sind 1,4,-Pheylendiaminsulfonsäure, 4,4′-Diaminodiphenyl-2-sulfonsäure, oder Diaminomonocarbonsäuren, wie Ornithin und Lysin.

Die vorgenannten Polyamine können einzeln oder als Mischungen von zwei oder mehr Polyaminen eingesetzt werden.

Die zur Polykondensation benötigten Polyamine können aber auch nach an sich bekannten Verfahren durch Hydrolyse und Decarboxylierung aus der jeweiligen Isocyanatkomponente generiert werden.

Als Lösungsmittel (Cosolvens), in denen die Verbindungen der Formel I und/oder das Polyisocyanat gelöst sein können, kommen aliphatische und aromatische Kohlenwasserstoffe, wie Hexan, Cyclohexan, Benzol, Toluol, Xylol, Mineralöl oder Kerosin in Betracht. Weiterhin geeignet sind Cyclohexanon, Alkylcyclohexanon (insbesondere 3,5,5-Trimethylcyclohexanon), Isophoron, sowie halogenierte Kohlenwasserstoffe, wie Methylenchlorid, Chloroform, Kohlenstofftetrachlorid, Chlorbenzol und o-Dichlorbenzol.
Weiterhin sind Gemische von ein- und mehrfache alkylierten Aromaten geeignet, wie sie beispielsweise unter der Bezeichnung (SHELLSOL®) im Handel sind.

Mit dem oben beschriebenen Verfahren werden Mikrokapseln mit einer Kapselwand aus Polyharnstoff erhalten. Nach einer Abwandlung dieses Verfahrens können Mikrokapseln mit einer Kapselwand aus Polyharnstoff und bis zu 30 % Polyamid hergestellt werden. Bei diesem abgewandelten Verfahren werden bis zu 30 % der molaren Menge des für die Bildung der Kapselwand erforderlichen Isocyanats durch die entsprechende Menge eines Säurechlorids einer zwei- oder mehrbasischen Carbonsäure ersetzt. Geeignete Säurechloride sind beispielsweise Adipinsäuredichlorid, Maleinsäuredichlorid, Sebacinsäuredichlorid und Succinsäuredichlorid. Diese Säurechloride können zusammen mit dem Polyisocyanat in einem N-Chloracetylcyclohexenamin der Formel I oder in einer Mischung eines N-Chloracetylcyclohexenamins der Formel I und eines Chloracetanilids der Formel II, gewünschtenfalls in Gegenwart eines zusätzlichen mit Wasser nicht mischbaren Lösungsmittels, gelöst werden.

Die Herstellung der wässrigen Suspensionen von Mikrokapseln wird in vorteilhafter Weise in Gegenwart eines oder mehrerer Dispergiermittel durchgeführt. Vorzugsweise werden die wässrigen Suspensionen von Mikrokapseln der vorliegenden Erfindung nach dem in der Europäischen Patentanmeldung EP-A-0 214 936 beschriebenen Verfahren in Gegenwart eines anionischen Dispergiermittels und wenigstens eines nichtionischen Schutzkolloids und/oder eines nichtionischen Tensids hergestellt.

Als anionische Dispergatoren kommen allgemein Oligomere und Polymere, sowie Polykondensate in Betracht, die eine ausreichende Anzahl von anionischen Gruppen enthalten, um ihre Wasserlöslichkeit zu gewährleisten. Geeignete anionische Gruppen sind beispielsweise Sulfogruppen oder Carboxylgruppen, wobei Polymere mit Carboxylgruppen nur bei höherem pH-Wert, vorzugsweise bei einem pH-Wert grösser als 5, verwendet werden können. Die Zahl der anionischen Gruppen pro Polymermolekül beträgt in der Regel mindestens 60 % der Anzahl der am Aufbau des Moleküls beteiligten Monomereinheiten. Oligomere und Polymere, die Sulfogruppen enthalten, können entweder durch Polymerisation Sulfogruppen enthaltenden Monomeren oder durch Sulfonierung der betreffenden Oligomeren oder Polymeren hergestellt werden. Polymere, die Carboxylgruppen enthalten, können durch Verseifung von Polyacrylaten oder Polymethacrylaten erhalten werden, wobei der Verseifungsgrad mindestens 60 % betragen muss. Insbesondere sind als anionische Dispergatoren sulfonierte Polymere und Kondensationsprodukte von aromatischen Sulfonsäuren mit Formaldehyd geeignet. Typische Beispiele für solche anionischen Dispergatoren sind:

A. Salze der Polystyrolsulfonsäure, insbesondere die Alkalimetall-, Erdalkalimetall- und Ammoniumsalze, sowie die Salze von organischen Aminen, die durch Polymerisation von Styrolsulfonsäure beziehungsweise deren Salzen oder durch Sulfonierung von Polystyrol und anschliessende Neutralisation mit einer entsprechenden Base erhalten werden können, wobei im Falle der Sulfonierung von Polystyrol der

Sulfonierungsgrad wenigstens 60 % betragen sollte;

B. Salze der Polyvinylsulfonsäure, insbesondere die Alkalimetall-, Erdalkalimetall- und Ammoniumsalze, sowie die Salze mit organischen Aminen, die durch Polymerisation von Vinylsulfonsäure oder deren Salzen herstellbar sind;

C. Salze von Kondensationsprodukten von Naphthalinsulfonsäuren, insbesondere Naphthalin-2-sulfonsäure, mit Formaldehyd, insbesondere die Alkalimetall-, Erdalkalimetall- und Ammoniumsalze, sowie ihre Salze mit organischen Aminen, die durch Sulfonieren von Naphthalin, Kondensation der gebildeten Naphthalinsulfonsäuren mit Formaldehyd und Neutralisation mit einer entsprechenden Base erhalten werden können. Die Kondensationsprodukte können durch die Formel

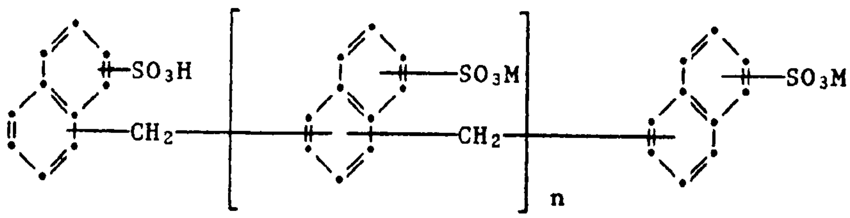

beschrieben werden, in welcher M Natrium, Kalium, Magnesium, Kalzium, Ammonium oder das von einem organischen Amin abgeleitete Kation und n 1-25 bedeuten. Das Molekulargewicht dieser Produkte beträgt etwa 500-6000.

D. Salze von Kondensationsprodukten von Naphthalinsulfonsäure mit Phenolsulfonsäure und Formaldehyd, insbesondere die Alkalimetall-, Erdalkalimetall- und Ammoniumsalze, sowie Salze mit organischen Aminen. Diese Produkte stellen Sulfogruppen enthaltende Polymere mit einem mittleren Molekulargewicht von 6'000-8'000 dar, in denen die monomeren Bausteine Naphthalin und Phenol teils über Methylengruppen und teils über Sulfongruppen miteinander verbunden sind. Ihre Struktur ist ungefähr wie folgt:

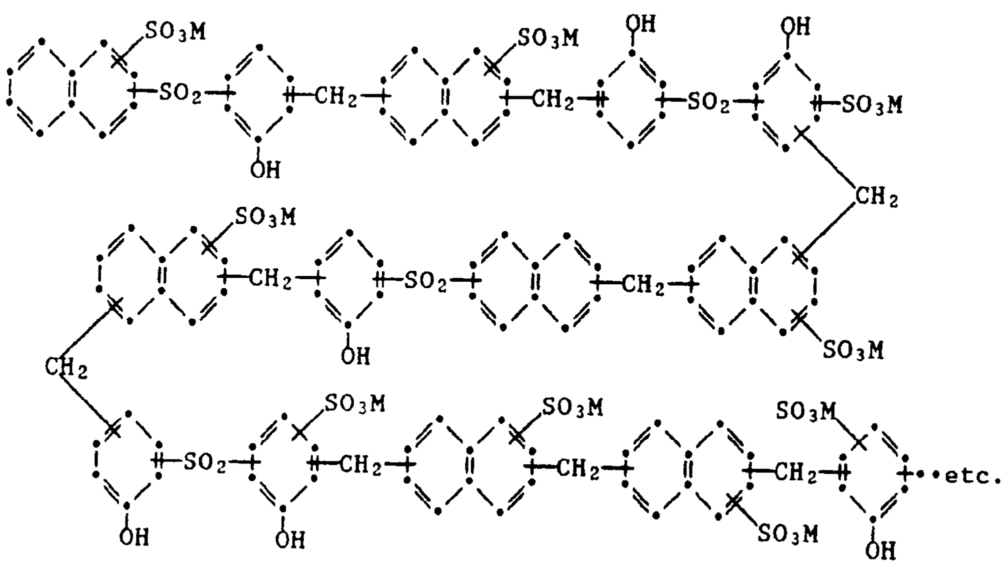

wobei M Natrium, Kalium, Magnesium, Calcium, Ammonium oder das von einem organischen Amin abgeleitete Kation bedeutet.

E. Salze der Ligninsulfonsäure, insbesondere das Natrium-, Kalium-, Magnesium-, Calcium- oder Ammoniumsalz.

Bevorzugte anionische Dispergatoren sind Salze von Polystyrolsulfonsäure (Typ A), Salze von Kondensationsprodukten von Naphthalinsulfonsäure mit Formaldehyd (Typ C) und insbesondere Kondensationsprodukte von Naphthalinsulfonsäure mit Phenolsulfonsäure und Formaldehyd (Typ D).

Die als anionische Dispergatoren besonders bevorzugten Kondensationsprodukte von Naphthalinsulfonsäure mit Phenolsulfonsäure und Formaldehyd des oben genannten Typs D sind bisher nicht in der Literatur beschrieben. Sie können hergestellt werden, indem man Naphthalin bei 120-130°C zunächst mit konzentrierter

Schwefelsäure und/oder Oleum in Naphthalinsulfonsäure überführt, dem Reaktionsgemisch anschliessend Phenol zufügt und zuerst bei 120-130° weiter umsetzt und dann im Vakuum bei 150-170°C das Reaktionswasser abtrennt und das Reaktionsprodukt nach Abkühlung auf 90-100° mit Formaldehyd kondensiert, danach auf pH 6-7 neutralisiert, zur Trockene eindampft und den Rückstand granuliert. Man erhält so einen wasserlöslichen anionischen Dispergator (nachfolgend "Dispergator A" genannt) in Form eines Granulats mit einem mittleren Molekulargewicht von 6'000-8'000.

Bei der Sulfonierung von Naphthalin unter den vorgenannten Bedingungen wird vorwiegend Naphthalin-2-Sulfonsäure neben geringen Mengen Naphthalindisulphonsäure gebildet. Nach Zugabe des Phenols wird dieses ebenfalls sulfoniert. Dabei werden jedoch, insbesondere beim nachfolgenden Aufheizen auf 150-170° neben Phenolsulfonsäure auch in erheblichem Masse Sulfone, wie 4,4'-Dihydroxydiphenylsulfon und 4-Hydroxyphenylnaphthylsulfon, gebildet. Daher entsteht bei der nachfolgenden Kondensation mit Formaldehyd ein Polymeres, dessen monomere Bausteine Naphthalin und Phenol teils über Methylengruppen und teils über Sulfongruppen verknüpft sind. Bei der Herstellung von Dispergator A können Naphthalin, Phenol, Schwefelsäure, Formaldehyd und Base im Molverhältnis 1:0,5-1:2-2,5:0,4-0,8:2-3 eingesetzt werden. Vorteilhaft beträgt das Molverhältnis von Naphthalin:Phenol:Schwefelsäure:Formaldehyd:Base 1:0,7:2:0,5:2, wobei als Base vorteilhaft Natriumhydroxid verwendet wird. Die Schwefelsäure besteht vorteilhaft aus Gemischen von konzentrierter Schwefelsäure und Oleum, wobei die Menge von freiem $SO_3$ im Oleum mindestens der Menge Wasser in der konzentrierten Schwefelsäure equivalent ist, sodass beim Vermischen von konzentrierter Schwefelsäure und Oleum mindestens 100 %ige Schwefelsäure entsteht. Formaldehyd wird vorteilhaft als wässrige Lösung, beispielsweise 37%ige wässrige Lösung, eingesetzt. Die destillative Abtrennung des Reaktionswassers erfolgt vorteilhaft bei einem Druck von 10-50 mbar.

Als nichtionische Schutzkolloide kommen allgemein wasserlösliche Polymere in Betracht, deren Molekulargewicht in der Regel 10 000 - 200 000 beträgt. Dabei kann über das Molekulargewicht des jeweils verwendeten wasserlöslichen Polymeren der mittlere Durchmesser der gebildeten Kapseln beeinflusst werden. Die Verwendung von wasserlöslichen Polymeren mit niedrigerem Molekulargewicht hat eine geringere Viskosität des Reaktonsgemisches und damit die Bildung von grösseren Kapseln zur Folge, während die Verwendung von wasserlöslichen Polymeren mit höherem Molekulargewicht eine höhere Viskosität des Reaktionsgemisches und damit die Bildung von Kapseln mit kleinerem Durchmesser bewirkt. Geeignete wasserlösliche Polymere sind beispielsweise:

Polyvinylalkohol, Polyvinylmethyläther, Polyvinylpyrrolidon, alkylierte Polyvinylpyrrolidone, Hydroxyäthylcellulose, Hydroxypropylcellulose, Methylcellulose (Substitutionsgrad: 1,5-2), Hydroxyäthymethylcellulose, Hydroxypropylmethylcellulose, Poly-(2-hydroxyäthyl)-methacrylat, Poly-[2-(2-hydroxyäthoxy)-äthyl]-methacrylat, Polyäthylenoxid (Polyoxyäthylen) und Polyallylalkohol (Polyglycidol).

Bevorzugte nichtionische Schutzkolloide sind Polyvinylalkohol und alkylierte Polyvinylpyrrolidone. Besonders geeignet sind Polyvinylalkohole mit einer Viskosität von 4-60 cp (gemessen an 4 %igen wässrigen Lösungen bei 20°C), die durch Verseifung von Polyvinylacetat hergestellt wurden, wobei der Verseifungsgrad mindestens 60 %, vorzugsweise jedoch 80-95 % beträgt. Geeignete Produkte dieser Art sind beispielsweise unter der Bezeichnung MOWIOL® im Handel.

Als bevorzugtes alkyliertes Polyvinylpyrrolidon ist Butylpolyvinylpyrrolidon mit einem Molekulargewicht von 10000-20000 zu nennen. Ein geeignetes Produkt dieser Art ist beispielsweise unter der Bezeichnung ANTARON® P-904 der GAF Chem. Corp. im Handel.

Als nichtionische Tenside kommen allgemein nichtionische wasser-lösliche Polymere mit einem Molekulargewicht unter 20 000 in Betracht. Besonders geeignete nichtionische Tenside dieser Art sind die durch Umsetzung von Aethylenoxid oder durch kombinierte Umsetzung von Aethylenoxid und Propylenoxid mit Fettalkoholen, Alkylphenolen, Fettsäuren, Fettsäureestern von Polyhydroxyverbindungen, Fettsäureamiden und Fettaminen herstellbaren Produkte, wobei die Zahl der Aethylenoxid und Propylenoxid-Einheiten in weiten Grenzen variiert werden kann. Im allgemeinen liegt die Zahl der Aethylenoxid bzw. Aethylenoxid/Propylenoxid-Einheiten bei 1-200, vorzugsweise bei 5-100 und insbesondere bei 8-40. Geeignete nichtionische Tenside sind beispielsweise:

Alkylpolyäthylenglykoläther der Formel

$$R_1-O\left[-CH_2-CH_2-O\right]_{n_1}-H$$

worin $R_1$ $C_8$-$C_{20}$Alkyl und $n_1$ 2-100 bedeutet. Produkte dieser Art sind im Handel beispielsweise unter den Bezeichnungen BRIJ® (Atlas Chemical), ETHYLAN® CD und ETHYLAN® D (Diamond Shamrock) GENAPOL® C, GENAPOL® O und GENAPOL® S (Hoechst AG) verfügbar;

Alkylphenolpolyäthylenglykoläther der Formel

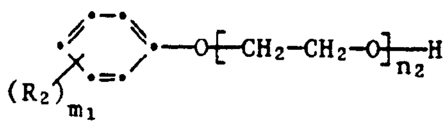

worin $R_2$ $C_8$-$C_{12}$-Alkyl, $m_1$ 1-3 und $n_2$ 2-40 bedeutet. Bevorzugte Bedeutungen von $R_2$ sind Octyl und Nonyl. Produkte dieser Art sind im Handel erhältlich, beispielsweise unter den Bezeichnungen Antarox (GAF), TRITON® X (Röhm und Haas Co.), ATLOX® 4991 (ICI), ARKOPAL® N (American Hoechst) und ETHYLAN® (Lankro Chem. Ltd);

α-Phenäthylphenolpolyglykoläther der Formel

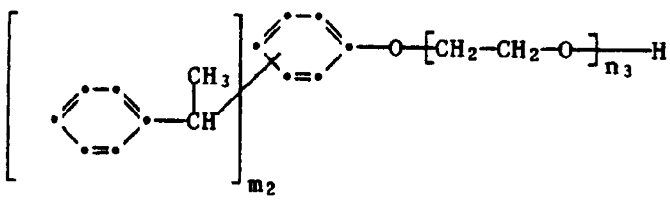

worin $m_2$ 1-3 und $n_3$ 5-40 bedeutet. Diese Produkte werden auch als äthoxylierte Styrylphenole bezeichnet. Im Handel erhältliche Produkte dieser Art sind beispielsweise DISTY® 125 (Geronazzo) und SOPROPHOR® CY 18 (Rhone Poulenc S.A.);

Fettsäure(polyäthoxyäthyl)ester der Formel

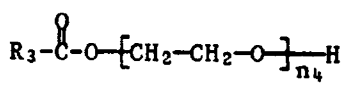

worin $R_3$ $C_8$-$C_{22}$-Alkyl oder $C_{10}$-$C_{22}$-Alkenyl und $n_4$ 2-50 bedeutet. Diese Produkte leiten sich insbesondere von Laurinsäure, Oleinsäure und Stearinsäure ab. Im Handel sind solche Produkte beispielsweise unter der Bezeichnung NONISOL® (Ciba-Geigy) oder MYRJ® (ICI) erhältlich;

Sorbitan-polyäthylenglykoläther-fettsäureester der Formel

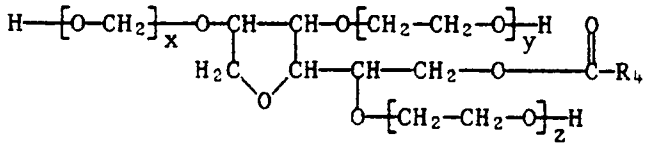

worin $R_4$ $C_8$-$C_{20}$-Alkyl und x, y und z je 1-50 bedeuten, wobei die Summe x+y+z 20-150 beträgt. Als Säurereste $R_4$ kommen insbesondere die Reste der Laurinsäure, Stearinsäure, Palmitinsäure und Oleinsäure in Betracht. Solche Produkte werden auch als Polysorbate bezeichnet und sind im Handel beispielsweise unter der Bezeichnung TWEEN® (ICI) erhältlich;

Triglycerid-polyäthylenglykoläther der Formel

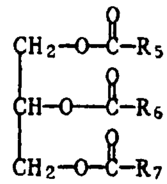

in welcher $R_5$, $R_6$ und $R_7$ den Rest der Formel

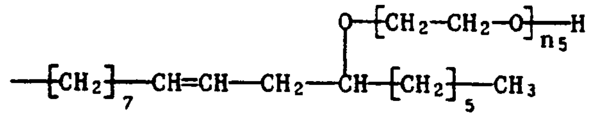

und $R_5$ und $R_6$ unabhängig voneinander auch $C_8$-$C_{20}$-Alkyl oder $C_8$-$C_{20}$-Alkenyl bedeuten, wobei $n_5$ für 3-100 steht. Als Säurereste $R_5CO$-und $R_6CO$-mit $C_8$-$C_{20}$-Alkyl- und $C_8$-$C_{20}$-Alkenylgruppen kommen insbesondere die Reste der Laurinsäure, Palmitinsäure, Stearinsäure und Oleinsäure in Betracht. Ein bevorzugter Vertreter dieses Tensid-Typs ist äthoxyliertes Rizinusöl. Solche Produkte sind im Handel unter der Bezeichnung EMULSOGEN® (Hoechst AG) erhältlich.

Fettsäure-polyäthoxyäthylamide der Formel

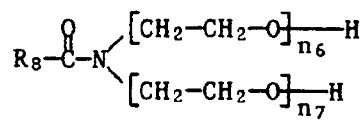

worin $R_8$ $C_8$-$C_{20}$-Alkyl, $C_8$-$C_{20}$-Alkenyl und $n_6$ und $n_7$ jeweils 1-25 bedeutet. Als Säurereste $R_8CO$- kommen insbesondere die Reste der Laurinsäure, Oleinsäure, Palmitinsäure und Stearinsäure in Betracht. Produkte dieser Art sind beispielsweise unter den Bezeichnungen AMIDOX® (Stepan Chemical Co.) ETHOMID® (Armak Co.) im Handel;

N-Polyäthoxyäthylamine der Formel

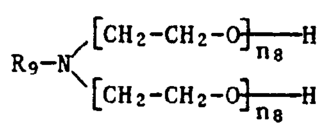

wobei $R_9$ $C_8$-$C_{18}$-Alkyl oder $C_8$-$C_{18}$-Alkenyl bedeutet und $n_8$ jeweils 1-15 bedeutet. Besonders geeignet sind die von Fettaminen, wie Cocosfettamin, Oleylamin, Stearylamin und Talgfettamin abgeleiteten Produkte. Solche Produkte sind beispielsweise unter der Bezeichnung GENAMIN® (Hoechst) im Handel;

N,N,N',N'-Tetra(polyäthoxypolyproxyäthyl)-äthylendiamine der Formel

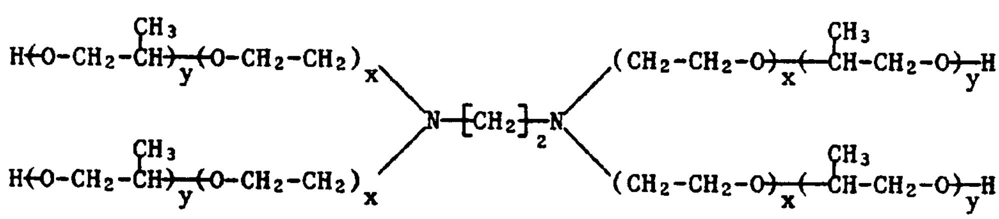

worin x und y je 2-50 und die Summe x+y jeweils 4-100 beträgt. Produkte dieser Art sind im Handel erhältlich, insbesondere unter den Bezeichnungen TERRONIL® und TETRONIC® (BASF Wyandotte Corp.); Alkyl-polyäthylenglykol/polypropylenglykoläther der Formel

$$R_{10}-O-[CH_2-CH_2-O]_{n_9}-[\underset{}{CH}(CH_3)-CH_2-O]_{n_{10}}-[CH_2-CH_2-O]_{n_{11}}-H$$

worin $R_{10}$ Wasserstoff, $C_8$-$C_{20}$-Alkyl oder $C_8$-$C_{20}$-Alkenyl und $n_9$ und $n_{11}$ je 2-200 und $n_{10}$ 10-80 bedeutet und die Summe $n_9+n_{10}+n_{11}$ 15-450 beträgt. Besonders geeignete Produkte dieser Art sind beispielsweise unter der Bezeichnung PLURONIC® (BASF Wyandotte Corp.) im Handel erhältlichen Polyäthylenoxid-Polypropylenoxid-Blockpolymerisate ($R_{10}$=H).

Bevorzugte nichtionische Tenside sind Aethylenoxid-Propylenoxid-Blockpolymerisate (PLURONICS®, PLURONIC F-108), N,N,N',N'-Tetra(polyäthoxypolypropoxyäthyl)-äthylendiamine (TETRONICS®), Nonylphenolpolylglykoläther mit 10-20-Aethylenoxideinheiten, Alkylpolyäthylenglykoläther, die sich von Fettalkoholen ableiten (GENAPOL®) und N-Polyäthoxyäthylamine, die sich von Fettaminen ableiten (GENAMIN®). Besonders bevorzugte nichtionische Tenside sind Aethylenoxid-Propylenoxid-Blockpolymersate (PLURONICS®).

Das bevorzugte Verfahren zur Herstellung der wässrigen Suspensionen von Mikrokapseln gemäss vorliegender Erfindung wird vorteilhaft in der Weise durchgeführt, dass man zunächst den anionischen Disperator und das nichtionische Schutzkolloid und/oder das nichtionische Tensid in Wasser löst und anschliessend eine Lösung eines oder mehrerer Polyisocyanate gegebenenfalls unter Beimischung von Säuredichloriden der vorgenannten Art in einer oder mehreren der vorgenannten pestiziden Wirksubstanzen der Formel I und/oder II oder in einer Lösung einer oder mehrerer dieser Wirksubstanzen in einem mit Wasser nicht mischbaren Lösungsmittel zugibt und bis zur Entstehung einer homogenen Dispersion intensiv rührt. Dann fügt man unter weiterem Rühren ein oder mehrere Polyamine der oben genannten Art zu und rührt die Mischung bis zur vollständigen Umsetzung des Polyamins mit dem Isocyanat weiter. Die Polyamine werden vorteilhaft als wässrige Lösung zugesetzt.

Die Reaktionszeiten des Polyisocyanats mit dem Polyamin beträgt in der Regel 2-30 Minuten. Der jeweilige Grad der Umsetzung und das Ende der Reaktion können durch Titration des in der wässrigen Phase vorliegenden freien Amins festgestellt werden.

Die zur Bildung der Kapselwand benötigten Komponenten können im allgemeinen in einer Menge von 2,5-40 %, insbesondere 2,5-30 Gew.-% vorzugsweise 10-25 Gew.% bezogen auf das einzukapselnde Material eingesetzt werden, wobei das einzukapselnde Material aus einer Wirksubstanz der Formel I oder einem Gemisch von zwei und mehreren Wirksubstanzen der Formel I und/oder II oder aus einer Lösung einer Wirksubstanz oder einer Mischung von zwei und mehreren Wirksubstanzen in einem mit Wasser nicht-mischbaren Lösungsmittel bestehen kann. Die im Einzelfall verwendete Menge der zur Bildung der Kapselwand benötigten Komponenten hängt in erster Linie von der Wanddicke der herzustellenden Kapseln und ferner auch von der Kapselgrösse ab.

Der Durchmesser der nach dem obigen Verfahren hergestellten Mikrokapseln wird durch den Durchmesser der in der wässrigen Phase dispergierten Tröpfchen bestimmt. Der Durchmesser dieser Tröpfchen hängt seinerseits von der Rührgeschwindigkeit ab, die bei der Herstellung der Dispersion angewandt wurde. Bei hoher Rührgeschwindigkeit werden kleine Tröpfchen gebildet und der Durchmesser der Tröpfchen wächst mit abnehmender Rührgeschwindigkeit. Der Durchmesser der Mikrokapseln hängt jedoch nicht nur von der Rührgeschwindigkeit sondern auch von anderen Faktoren ab, wie z.B. vom Typ des verwendeten Rührers, dem Rührvolumen, der Viskosität der Mischung usw. Die zur Herstellung von Mikrokapseln mit einem bestimmten Durchmesser erforderlichen Parameter können leicht experimentell bestimmt werden.

Die herbiziden Zusammensetzungen gemäss vorliegender Erfindung enthalten vorteilhaft Mikrokapseln mit einem Durchmesser von 1-50 μm. Vorzugsweise beträgt der Durchmesser der Mikrokapseln 2-30 μm. Bei einem vorgegebenen Durchmesser der Mikrokapseln hängt die Dicke der Kapselwand von der Menge des Polymeren ab, das durch die Wand bildenden Komponenten gebildet wird, d.h. von der Menge des eingesetzten Polyisocyanats und des eingesetzten Amins. Für die Bildung von Mikrokapseln mit einem Durchmesser im vorgenannten Bereich wird ein Polymergehalt der Kapseln von 2,5-40 Gew.% vorgeschalgen. Vorzugsweise besitzen die Mikrokapseln einen Polymergehalt von 5-30 Gew.% und besonders bevorzugt 10-25 Gew.% bezogen auf das einzukapselnde Material.

Die Geschwindigkeit, mit der die Aktivsubstanz von der Kapsel abgegeben wird, kann durch die Dicke der Kapselwand, den Durchmesser der Kapseln und dadurch beeinflusst werden, dass man zusammen mit der Aktivsubstanz ein zusätzliches mit Wasser nicht mischbares Lösungsmittel einkapselt. Durch die gleichzeitige

Verwendung eines anionischen Dispergators und eines nichtionischen Schutzkolloids und/oder nichtionischen Tensids wird bereits beim Dispergieren der Lösung des Polyisocyanats im pestiziden Wirkstoff die insbesondere bei der alleinigen Verwendung eines anionischen Dispergators, wie Ligninsulfonat, auftretende Starke Viskositätserhöhung vermieden. Dadurch wird nicht nur die Durchführung des Verfahrens erleichtert, sondern es wird gleichzeitig eine schnellere und vollständigere Umsetzung von Polyisocyanat und Polyamin erreicht, wodurch die Bildung unerwünschter Nebenprodukte weitgehend unterbunden wird. Durch die Verringerung der Viskosität des Reaktionsgemisches resultiert ferner bei gleicher Scherkraft eine feinere Dispersion und damit eine Verkleinerung des Durchmessers der hergestellten Kapseln. Die erfindungsgemäss hergestellten Kapselsuspensionen sind stabil und zeigen auch bei längerer Lagerung keine Serum- und Sedimentbildung. Die erfindungsgemäss herstellbaren Suspensionen von Mikrokapseln zeigen ferner bei geeigneter Wahl von Art und Menge der anionischen und nichtionischen Dispergatoren thixotrope Eigenschaften und lassen sich daher durch Aufschütteln oder durch Rühren auf einfache Weise in einen leicht fliessfähigen Zustand bringen.

Mit dem vorstehend beschriebenen Verfahren ist es möglich wässrige Suspensionen von Mikrokapseln herzustellen, die 100-700 g Mikrokapseln pro Liter enthalten. Vorzugsweise enthalten die wässrigen Suspensionen von Mikrokapseln gemäss vorliegender Erfindung 400-600 g Mikrokapseln pro Liter.

Die nach dem vorstehend beschriebenen Verfahren erhältlichen wässrigen Suspensionen von Mikrokapseln sind unmittelbar gebrauchsfertig. Sie können jedoch für Transport und Lagerung durch weitere Zusätze, wie oberflächenaktive Mittel, Verdicker, Antischaummittel und Frostschutzmittel, stabilisiert werden.

Es ist jedoch auch möglich, die Mikrokapseln, z.B. durch Filtrieren oder Zentrifugieren, aus der unmittelbar erhaltenen wässrigen Suspension abzutrennen und entweder zu trocknen oder erneut in eine Suspension überzuführen. Die aus der Suspension abgetrennten und getrockneten Mikrokapseln stellen ein rieselfähiges Pulver dar, das praktisch unbeschränkt lagerfähig ist.

Die herbiziden Zusammensetzungen gemäss vorliegender Erfindung haben sowohl eine gute Initialwirkung als auch eine gute Dauerwirkung. Dies muss als überraschend angesehen werden, da die Mikroenkapsulierung von Aktivsubstanzen nach allgemeiner Erfahrung von einem Verlust an Initialwirkung begleitet ist.

In den nachfolgenden Beispielen, die die Erfindung näher erläutern, stehen die verwendeten Handelsnamen und andere nicht selbstverständliche Bezeichnungen für folgende Produkte:

MDI für 4,4′-Diphenylmethandiisocyanat

HMDA für 1,6-Hexamethylendiamin

CS 500, CS 450, CS 400 and CS 300 bezeichnen die Menge an mikroverkapseltem Wirkstoff je Liter (500 g/l, 450 g/l, 400 g/l bzw. 300 g/l)

EC 250 und EC 480 bezeichnen die Menge an Wirkstoff in konventionellen Emulsionskonzentraten je Liter (250 g/l, 480 g/l).

Anionische Dispergatoren

Dispergator A:

Natriumsalz eines Kondensationsprodukts von Naphthalinsulfonsäure mit Phenolsulfonsäure und Formaldehyd hergestellt nach Beispiel A1.

Nichtionische Tenside und Schutzkolloide

PLURONIC® F-108:

Aethylenoxid-Propylenoxid-Blockpolymerisat der Formel

$$(EO)_x—(PO)_y—(EO)_z$$

mit einem Molekulargewicht von etwa 16000 und einem Aethylenoxidanteil von 80 %, Hersteller: BASF Wyandotte Corp.

ANTARON® P-904:

Butylpolyvinylpyrrolidon mit einem mittleren Molekulargewicht von 16000, Hersteller: GAF Chem. Corp.

Beispiel A1

Herstellung von Dispergator A

| | | | |
|---|---|---|---|
| Ausgangsmaterialien: | 288 g | (2,25 Mol) | Naphthalin |
| | 144 g | (1,53 Mol) | Phenol |
| | 440 g | (4,48 Mol) | 100%ige Schwefelsäure |
| | 78,5 g | (0,97 Mol) | 37%ige wässrige Formaldehydlösung |
| | 370 g | (4,4 Mol) | 48%ige wässrige Natronlauge |

Das Naphthalin wird in einem Rührgefäss geschmolzen und nach Zugabe der Schwefelsäure 4 Stunden auf 120-125°C erhitzt. Dann wird das Phenol zugegeben und die Temperatur eine weitere Stunde auf 120-125°C gehalten. Anschliessend wird das Reaktionsgefäss auf einen Druck von 15 mbar evakuiert, die Temperatur langsam auf 160°C gesteigert und 3 Stunden dort gehalten, wobei Reaktionswasser durch Destillation abgetrennt wird. Danach wird das Reaktionsgemisch auf 105-110°C abgekühlt und durch Rühren homogenisiert. Dann wird durch vorsichtige Zugabe von 200 g Eis auf 90°C abgekühlt, wobei die Homogenität des Gemisches durch ständiges Rühren aufrecht erhalten wird. Danach wird während einer Stunde die Formaldehydlösung bei 90-95°C zugegeben und 3 Stunden bei 95%C nachgerührt. Eine Probe des Reaktionsgemisches bildet nun mit Wasser eine klare 5%ige Lösung und riecht nicht mehr nach Formaldehyd. Nun wird das Reaktionsgemisch durch Zugabe von je 60 g Eis und 60 g Wasser auf 80°C abgekühlt. Nach Zugabe von weiteren 180 ml Wasser wird mit etwa 230-250 ml 48%iger Natronlauge bei einer Temperatur von 80°C neutralisiert. Dann ist der der pH-Wert einer 10%igen Lösung einer Probe des Reaktionsgemisches etwa 6,5. Das Reaktionsgemisch wird nun im Vakuum zur Trockene eingedampft und granuliert. Auf diese Weise werden 900 g Dispergator A in Form eines wasserlöslichen Granulats erhalten.

Beispiele zur Mikroverkapselung von N-chloracetyl-N-Isopropyl-3,5,5(3)-trimethylcyclohex-1-en-amin (Trimexachlor)

In den nachstehend angegebenen Beispielen kann die durchschnittliche Teilchengrösse durch die Rührgeschwindigkeit beeinflusst werden.

Die Herstellungsbeispiele werden mit einem X 20- bzw. X 40-Hochgeschwindigkeitsrührer der Firma YSTRAL GmbH, D-7801 Ballrechten-Dottingen sowie bei grösserem Teilchendurchmesser mit einem Propellerrührer durchgeführt.
Es sind in Abhängigkeit von der Umlaufgeschwindigkeit und Rührertyp nachstehende Teilchengrössen herstellbar:
X 20- bzw. X 40-Hochgeschwindigkeitsrührer:

| Umlaufgeschwindigkeit | Teilchengrösse |
|---|---|
| 10 m/sec | 2 µm |
| 5 m/sec | 6 µm |

Propellerrührer:

| Umlaufgeschwindigkeit | Teilchengrösse |
|---|---|
| 0,5 m/sec | 30 µm |

Beispiel H1, Herstellung einer CS 500 Mikroverkapselung von Trimexachlor

1a. In einem 250 ml Becherglas werden 0.8 g Dispergator A und 0,8 g Pluronic F-108 in 71 g deionisiertem

Wasser gelöst und unter intensivem Rühren eine Lösung von 3,4 g MDI in 80 g Trimexachlor zugegeben. Nach etwa 1 Minute werden 1.4 g HMDA (in Form einer 40 %igen wässrigen Lösung) zugegeben. Es wird für etwa 1 Stunde leicht weitergerührt, wobei die Reaktionsmischung wieder auf RT abkühlt. Es werden, abhängig von der Rührgeschwindigkeit, Mikrokapseln von 2-30 µm erhalten.

1b. In einem 250 ml Becherglas werden 0,8 g Dispergator A und 0,8 g Pluronic F-108 in 64 g deionisiertem Wasser gelöst und unter intensivem Rühren eine Lösung von 7.2 g MDI in 80 g Trimexachlor zugegeben. Nach etwa 1 Minute werden 3.0 g HMDA (in Form einer 40%igen wässrigen Lösung) zugegeben und für etwa 1 Stunde leicht weitergerührt. Es werden, abhängig von der Rührgeschwindigkeit Mikrokapseln von 2-30 µm erhalten.

1c. In einem 250 ml Becherglas werden 1.6 g Dispergator A und 1.6 g Pluronic F-108 in 53 g deionisiertem Wasser gelöst und unter intensivem Rühren zunächst eine Lösung von 14,9 g MDI in 80 g Trimexachlor und nach etwa 1 min 6.2 g HMDA (in Form einer 40%igen wässrigen Lösung) zugegeben. Es wird für etwa 1 Stunde leicht weitergerührt. Abhängig von der Rührgeschwindigkeit werden Mikrokapseln von 2-30 µm erhalten.

Beispiel H2, Herstellung einer CS 450 Mikroverkapselung von Trimexachlor

2a. 0,9 g Dispergator A und 1,8 g Pluronic F 108 werden in 72,7 g deionisiertem Wasser gelöst und unter intensivem Rühren eine Lösung von 11,6 g MDI in 81 g Trimexachlor zugegeben. Nach etwa 1 Minute werden 4,8 g HMDA (in Form einer 40%igen wässrigen Lösung) zugegeben und eine Stunde lang leicht weitergerührt.

Es werden je nach Rührgeschwindigkeit Mikrokapseln von 3-30 µm erhalten.

2b. 0,9 g Dispergator A und 1,8 g Pluronic F 108 werden in 56 g deionisiertem Wasser gelöst und unter intensivem Rühren eine Lösung von 14,6 g MDI in 72 g Trimexachlor zugegeben. Nach etwa 1 Minute werden 6,0 g HMDA (in Form einer 40%igen wässrigen Lösung) zugegeben und eine Stunde leicht weitergerührt. Man erhält, je nach Rührgeschwindigkkeit, Mikrokapseln im Bereich von 3-30 µm.

Beispiel H3, Herstellung einer CS 400 Mikroverkapselung von Trimexachlor

3a. 0,8 g Dispergator A und 0,8 g Pluronic F 108 und 8 g 1,2-Propylenglykol werden in 44,4 g deionisiertem Wasser gelöst und unter intensivem Rühren eine Lösung von 28 g Toluol und 7,2 g MDI in 64 g Trimexachlor zugegeben. Nach etwa 1 Minute werden 3,0 g HMDA (in Form einer 40%igen wässrigen Lösung) zugegeben. Es wird 1 Stunde leicht weitergerührt und man erhält, je nach Rührgeschwindigkeit, Mikrokapseln von 2-30 µm.

3b. 0,8 g Dispergator A und 0,8 g Pluronic F 108 und 8 g 1,2-Propylenglykol werden in 46,2 g deionisiertem Wasser gelöst und unter intensivem Rühren eine Lösung von 28 g Toluol un 8,4 g MDI in 64 g Trimexachlor zugegeben. Nach etwa 1 Minute werden 1,8 g Ethylendiamin (in Form einer 40%igen wässrigen Lösung) zugegeben und etwa 1 Stunde leicht weitergerührt. Man erhält, abhängig von der Rührgeschwindigkeit bei der Zugabe der AS-Lösung zur wässrigen Lösung, Mikrokapseln im Bereich von 2-30 µm.

3c. 0,8 g Dispergator A und 0,8 g Pluronic F 108 werden in 52,4 g deionisiertem Wasser gelöst und unter intensivem Rühren eine Lösung von 28 g Toluol und 7,2 g MDI in 64 g Trimexachlor zugegeben. Nach etwa 1 Minute werden 3,0 g HMDA (in Form einer 40%igen wässrigen Lösung) zugegeben und man rührt für 1 Stunde leicht weiter. Man erhält, je nach Rührgeschwindigkeit, Mikrokapseln von 2-30 µm.

3d. 0,8 g Dispergator A und 0,8 g Pluronic F 108 werden in 54,2 g deionisiertem Wasser gelöst und unter intensivem Rühren eine Lösung von 18 g Toluol und 8,4 g MDI in 64 g Trimexachlor zugegeben. Nach etwa 1 Minute werden 1,8 g Ethylendiamin (in Form einer 40%igen wässrigen Lösung) zugegeben und 1 Stunde lang leicht weitergerührt. Man erhält, je nach Rührgeschwindigkeit, Mikrokapseln von 2-30 µm.

3e. 0,8 g Dispergator A und 0,8 g Pluronic F 108 werden in 56,8 g deionisiertem Wasser gelöst und unter intensivem Rühren eine Lösung von 30,3 g Isophoron und 3,5 g MDI in 64 g Trimexachlor zugegeben. Nach etwa 1 Minute werden 1,5 g HMDA (in Form einer 40%igen wässrigen Lösung) zugegeben und 1 Stunde lang leicht weitergerührt.

3f. 0,8 g Dispergator A und 0,8 Pluronic F 108 werden in 56,8 g deionisiertem Wasser gelöst und unter intensivem Rühren eine Lösung von 30,3 g 3,3,5-Trimethylcyclohexanon und 3,5 g MDI in 64 g Trimexachlor zugegeben. Nach etwa 1 Minute werden 1,5 g HMDA (in Form einer 40%igen wässrigen Lösung) zugegeben und leicht weitergerührt.

3g. 0,8 g Antaron P 904 und 8,0 g 1,2-Propylenglykol werden in 45,2 g deionisiertem Wasser gelöst und unter intensivem Rühren eine Lösung von 28 g Toluol und 7,2 g MDI in 64 g Trimexachlor zugegeben. Nach etwa 1 Minute werden 3,0 g HMDA (in Form einer 40%igen wässrigen Lösung) zugegeben und leicht weitergerührt.

3h. 0,8 g Antaron P 904 und 8,0 g 1,2-Propylenglykol werden in 48 g deionisiertem Wasser gelöst und unter intensivem Rühren eine Lösung von 28 g Toluol und 8,4 g MDI in 64 g Trimexachlor zugegeben. Nach etwa 1 Minute werden 1,8 g Ethylendiamin (in Form einer 40%igen wässrigen Lösung) zugegeben und für 1 Stunde leicht weitergerührt.

3i. 0,8 g Antaron P 904 werden in 55 deionisiertem Wasser gelöst und unter intensivem Rühren eine Lösung von 28 g Toluol und 8,4 g MDI in 64 g Trimexachlor zugegeben. Nach etwa 1 Minute werden 1,8 g Ethylendiamin (in Form einer 40%igen wässrigen Lösung) zugegeben und leicht weitergerührt.

Beispiel H4, Herstellung einer CS 300 Mikroverkapselung von Trimexachlor

4a. 5,0 g Dispergator A und 5,0 g Pluronic F 108 werden in 316,4 g deionisiertem Wasser gelöst und unter intensivem Rühren eine Lösung von 87,5 g MDI in 195 g Toluol und 300 g Trimexachlor zugegeben. Nach etwa 1 Minute werden 36,3 g HMDA (in Form einer 40%igen wässrigen Lösung) zugegeben und 1 Stunde lang leicht weitergerührt. Man erhält, abhängig von der Rührgeschwindigkeit während der Zugabe der Trimexachlor-Lösung zur wässrigen Lösung, Mikrokapseln von 2-30 µm.

4b. 7,5 g Dispergator A und 7,5 g Pluronic F 108 werden in 523 g deionisiertem Wasser gelöst und unter intensivem Rühren eine Lösung von 293 g Toluol und 58,4 g MDI in 450 g Trimexachlor zugegeben. Nach etwa 1 Minute werden 24,2 g HMDA (in Form einer 40%igen wässrigen Lösung) zugegeben und es wird 1 Stunde lang leicht weitergerührt. Man erhält, je nach Rührgeschwindigkeit, Mikrokapseln von 2-30 µm.

4c. 7,5 g Dispergator A und 7,5 g Pluronic F 108 werden in 535 g deionisiertem Wasser gelöst und unter intensivem Rühren eine Lösung von 293 g Toluol und 27,6 MDI in 450 g Trimexachlor zugegeben. Nach etwa 1 Minute gibt man 11,5 g HMDA (in Form einer 40%igen wässrigen Lösung) zu und rührt für ca. 1 Stunde lang leicht weitergerührt. Man erhält, je nach Rührgeschwindigkeit, Mikrokapseln von 2-30 µm.

4d. 0,6 g Dispergator A und 0,6 g Pluronic F 108 werden in 52,8 g deionisiertem Wasser gelöst und unter intensivem Rühren eine Lösung von 15 g Toluol und 20,6 g MDI in 36 g Trimexachlor zugegeben. Nach etwa 1 Minute gibt man 2,3 g HMDA (in Form einer 40%igen wässrigen Lösung) zu-und rührt für ca. 1 Stunde lang leicht weitergerührt. Man erhält, je nach Rührgeschwindigkeit, Mikrokapseln von 2-30 µm.

4e. 0,6 g Dispergator A und 0,6 g Pluronic F 108 werden in 53,8 g deionisiertem Wasser gelöst und unter intensivem Rühren eine Lösung von 12,9 g MDI und 15,0 g Toluol in 36 g Trimexachlor zugegeben. Nach etwa 1 Minute werden 0,1 g 1,4-Diazabicyclo[2,2,2]octan (in Form einer 40%igen wässrigen Lösung) zugegeben, auf 45-50°C aufgeheizt und für eine weitere Stunde leicht gerührt. Man erhält, je nach Rührgeschwindigkeit, Mikrokapseln im Bereich von 2-30 µm.

4f. 0,6 g Dispergator A und 0,6 g Pluronic F 108 werden in 61,6 g deionisiertem Wasser gelöst und unter intensivem Rühren eine Lösung von 15 g Toluol, 1,0 g Sebazinsäuredichlorid und 3,0 g MDI in 36 g Trimexachlor zugegeben. Nach etwa 1 Minute werden 1,7 g HMDA (in Form einer 40%igen wässrigen Lösung) zugegeben und für 1 Stunde leicht weitergerührt.

4g. 0,6 g Dispergator A und 0,6 g Pluronic F 108 werden in 62,6 g deionisiertem Wasser gelöst und unter intensivem Rühren eine Lösung von 15 g Toluol, 1,1 g Sebazinsäuredichlorid und 3,5 g MDI in 36 g Trimexachlor zugegeben. Nach etwa 1 Minute werden 1,1 g Ethylendiamin (in Form einer 40%igen wässrigen Lösung) zugegeben und für 1 Stunde leicht weitergerührt.

Beispiel H5 Herstellung von Mikrokapseln enthaltend Trimexachlor/Metolachlorgemische

5a. In einem 250 ml Becherglas werden 1,6 g Dispergator A, 1,6 g Pluronic F 108 und 8,0 g 1,2-Propylenglykol in 54 g Wasser gelöst. Unter intensivem Rühren wird eine Lösung von 40,0 g Trimexachlor und 6,9 g MDI in 40,0 g Metolachlor zugegeben und gerührt bis sich die gewünschte Teilchengrösse eingestellt hat.

Danach gibt man 2,8 g HMDA (in Form einer 40%-igen wässerigen Lösung) zu. Abhängig von der Rührgeschwindigkeit werden Mikrokapseln von 2-30 µm erhalten. Die Mikrokapseln haben einen Polymergehalt von 10,0 % bezogen auf Metolachlor und Trimexachlor (CS 500-Mikroverkapselung).

5b. In einem 250 ml Becherglas werden 1,6 g Dispergator A, 1,6 g Pluronic F 108 und 8,0 g 1,2-Propylenglykol in 36,5 g Wasser gelöst. Unter intensivem Rühren wird eine Lösung von 40,0 g Trimexachlor und 17,9 g MDI in 40,0 g Metolachlor zugegeben und gerührt bis sich die gewünschte Teilchengrösse eingestellt hat. Danach gibt man 7,4 g HMDA (in Form einer 40%-igen wässerigen Lösung) zu.

Abhängig von der Rührgeschwindigkeit erhält man Mikrokapseln von 2-30 µm. Die Mikrokapseln haben einen Polymergehalt von 26 % bezogen auf Metolachlor und Trimexachlor (CS 500-Mikroverkapselung).

5c. In einem 250 ml Becherglas werden 1,6 g Dispergator A und 1,6 g Pluronic F 108 in 38,0 g Wasser

gelöst. Unter intensivem Rühren wird eine Lösung von 56,0 g Trimexachlor und 15,8 g MDI in 24,0 g Metolachlor zugegeben und gerührt bis sich die gewünschte Teilchengrösse eingestellt hat.

Danach gibt man 6,5 g HMDA (in Form einer 40%-igen wässerigen Lösung) zu und rührt ca. 1 Stunde weiter. Abhängig von der Rührgeschwindigkeit erhält man Mikrokapseln von 2-30 µm. Die Mikrokapseln haben einen Polymergehalt von ca. 23 % bezogen auf Metolachlor und Trimexachlor (CS 500-Mikroverkapselung).

5d. In einem 250 ml Becherglas werden 1,6 g Dispergator A, 1,6 g Pluronic F 108 und 8,0 g 1,2-Propylenglykol in 38,2 g Wasser gelöst. Unter intensivem Rühren wird eine Lösung von 42,7 g Trimexachlor und 15,0 g MDI in 16,0 g Toluol und 21,3 g Metolachlor zugegeben. Nachdem sich die gewünschte Teilchengrösse eingestellt hat gibt man 6,2 g HMDA (in FOrm einer 40%-igen wässerigen Lösung) zu und rührt ca. 1 Stunde leicht weiter.

Man erhält Mikrokapseln mit einem Polymergehalt von 21 % bezogen auf Metolachlor, Trimexachlor und Toluol. Der Kapseldurchmesser beträgt in Abhängigkeit von der Rührgeschwindigkeit 2-30 µm (CS 400-Mikroverkapselung).

5e. In einem Becherglas werden 1,6 g Dispergator A, 1,6 g Pluronic F 108 und 8,0 g 1,2-Propylenglykol in 38,2 Wasser gelöst. Unter intensivem Rühren gibt man eine Lösung von 26,6 g Trimexachlor und 15,0 g MDI in 53,4 g Metolachlor zu und rührt weiter bis sich die gewünschte Teilchengrösse eingestellt hat.

Danach gibt man 6,2 g HMDA (in Form einer 40%-igen wässerigen Lösung) zu und rührt leicht weiter. Man erhält Mikrokapseln mit einem Polymergehalt von 21 % bezogen auf Metolachlor und Trimexachlor. Der Kapseldurchmesser beträgt in Abhängigkeit von der Rührgeschwindigkeit 2-30 µm (CS-500 Mikroverkapselung).

5f. In einem 250 ml Becherglas werden 1,6 g Dispergator A, 1,6 g Pluronic F 108 und 8,0 g 1,2-Propylenglykol in 54 g Wasser gelöst. Unter intensivem Rühren wird eine Lösung von 40,0 g Trimexachlor und 3,5 g MDI in 40,0 g Metolachlor zugegeben und gerührt, bis sich die gewünschte Teilchengrösse eingestellt hat. Danach gibt man 1,4 g HMDA (in Form einer 40%-igen wässerigen Lösung) zu. Abhängig von der Rührgeschwindigkeit werden Mikrokapseln von 2-30 µm erhalten. Die Mikrokapseln haben einen Polymergehalt von 5,0 % bezogen auf Metolachlor und Trimexachlor (CS-500-Mikroverkapselung).

Die Kenndaten der nach Beispiel 5a bis 5e erhältlichen Mikrokapseln sind in nachstehender Tabelle 1 zusammengefasst:

Tabelle 1

| Beispiel | Wirkstoffgehalt [%] | Trimexachlor/Metolachlor-Verhältnis | Lösungsmittelanteil | Polymergehalt [%]* | Kapseldurchmesser [µm] |
|---|---|---|---|---|---|
| 5a | 50 % | 1:1 | - | 10,8 | 2-30 |
| 5b | 50 % | 1:1 | - | 24,0 | 2-30 |
| 5c | 50 % | 2,3:1 | - | 22,0 | 2-30 |
| 5d | 40 % | 2:1 | 20,0 | 21,0 | 2-30 |
| 5e | 50 % | 1:2 | - | 21,0 | 2-30 |
| 5f | 50 % | 1:1 | - | 5,0 | 2-30 |

* bezogen auf das Kapselmaterial

## Biologische Beispiele

### Beispiel B1 Wirkung gegen Echinocloa crus-galli Initial- und Dauerwirkung (in steriler Erde)

Plastikschalen (50 x 30 x 10 cm) werden mit steriler Erde gefüllt und dann mit den zu untersuchenden Formulierungen der Wirksubstanz in der angegebenen Aufwandmenge behandelt und im Gewächshaus belassen. Direkt nach Applikation (Versuchsreihe I, Bestimmung der Initialwirkung) und 3 Wochen nach Applikation (Versuchsreihe II, Bestimmung der Dauerwirkung) der Wirksubstanz werden Echinochloa crus-galli Samen flach in die Erde eingesät. 10-12 Tage nach Einsaat wird die Herbizid-Wirkung durch visuelle Bonitur ausgewirkt (0 = wie unbehandelte Kontrolle, 100 = 100 % Herbizidwirkung).

Als Wirksubstanz wird Trimexachlor (N-Isopropyl-N-chloracetyl-3,5,5(3)-trimethyl-cyclohex-1-en-amin) in einer Standardformulierung als EC 250 (Emulsionskonzentrat) und als CS 500 gemäss Herstellungsbeispiel 1a mit einem durchschnittlichen Kapseldurchmesser von 2-4 µm und einem Polymergehalt von 2,5 bis 20 % verwendet.

Diese Trimexachlorformulierungen werden mit einem handelsüblichen Emulsionskonzentrat (EC 480) und einer handelsüblichen mikroverkapselten Formulierungen (MT 480) des Wirkstoffs Alachlor (N-Chloracetyl-N-methoxymethyl-2,6-diethylanilin) in ihrer Initial-und Dauerwirkung vergleichen.

Die Versuchsergebnisse sind in Tabelle 2 zusammengefasst:

Tabelle 2

| Wirkstoff Formulierung | Aufwendung [kg AS/ha] | Versuchsreihe I [direkt nach Applikation] | VersuchsreiheII [3 Wochen nach Applikation] |
|---|---|---|---|
| Trimexachlor | 0,25 | 99 | 0 |
| EC 250 | 0,5 | 100 | 5 |
| | 1,0 | 100 | 60 |
| | 2,0 | 100 | 95 |
| Trimexachlor 2,5 %[1)] | 0,25 | 99 | 20 |

Tabelle 2

| Wirkstoff Formulierung | Aufwendung [kg AS/ha] | Versuchsreihe I [direkt nach Applikation] | VersuchsreiheII [3 Wochen nach Applikation] |
|---|---|---|---|
| CS 500 2-4 µm 2) | 0,5 | 100 | 35 |
| | 1,0 | 100 | 65 |
| | 2,0 | 100 | 99 |
| Trimexachlor 5 % 1) | 0,25 | 100 | 20 |
| CS 500 2-4 µm 2) | 0,5 | 100 | 35 |
| | 1,0 | 100 | 89 |
| | 2,0 | 100 | 97 |
| Trimexachlor 10 % 1) | 0,25 | 100 | 35 |
| CS 500 2-4 µm 2) | 0,5 | 100 | 55 |
| | 1,0 | 100 | 89 |
| | 2,0 | 100 | 100 |
| Trimexachlor 20 % 1) | 0,25 | 95 | 70 |
| CS 500 2-4 µm 2) | 0,5 | 99 | 90 |
| | 1,0 | 100 | 100 |
| | 2,0 | 100 | 100 |
| Alachlor | 0,25 | 97 | 40 |
| EC 480 3) | 0,5 | 99 | 45 |
| | 1,0 | 100 | 97 |
| | 2,0 | 100 | 99 |
| Alachlor | 0,25 | 30 | 65 |
| MT 480 4) | 0,5 | 80 | 94 |
| | 1,0 | 93 | 95 |
| | 2,0 | 100 | 100 |

1) Polymeranteil

2) Teilchendurchmesser

3) Emulsionskonzentrat erhältlich als Lasso® der Monsanto Comp. USA (Wirkstoffgehalt 480 g/l)

4) Mikroverkapselte Formulierung erhältlich als Micro-Tech™ Lasso® der Monsanto Comp. USA (Wirkstoff 480 g/l).

Beispiel B2 Wirkung gegen Echinochloa crus-galli in nichtsteriler Erde (Dauerwirkung)

Analog zu Beispiel B1 werden eine Standardformulierung von Trimexachlor als EC 250, eine CS-400-Formulierung von Trimexachlor gemäss Beispiel H3 und zwei Metolachlor/Trimexachlor Formulierungen gemäss Beispiel H5 (5a und 5f) getestet. Anstelle von steriler Erde wird jedoch nichtsterile Erde verwendet. Die Einsaat der Versuchspflanzen erfolgt 3 Wochen nach Applikation, die Auswertung der Herbizidwirkung 10-12 Tage nach Einsaat.

Die Ergebnisse sind in Tabelle 3 zusammengefasst:

Tabelle 3

| Formulierung / Aufwandmenge kg AS/ha | Trimexachlor EC 250 | Trimexachlor CS 400 | Metolachlor/Trimexachlor 1:1 CS 500 5% Polymeranteil | Metolachlor/Trimexachlor 1:1 CS 500 10 % Polymeranteil |
|---|---|---|---|---|
| 0,25 | 0 | 0 | 90 | 35 |
| 0,5 | 0 | 10 | 90 | 60 |
| 1,0 | 0 | 95 | 98 | 98 |

## Patentansprüche

1. Herbizide Zusammensetzungen in Form einer wässrigen Suspension von Mikrokapseln mit einer Kapselwand aus Polyharnstoff, dadurch gekennzeichnet, dass die Mikrokapseln ein herbizid wirksames N-Chloracetylcyclohexenamin der Formel I

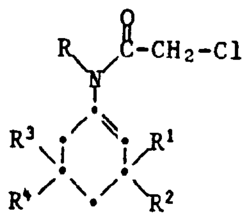

(I),

in welcher R $C_1$-$C_6$-Alkyl oder $C_3$-$C_6$-Alkenyl und $R^1$, $R^2$, $R^3$ und $R^4$ unabhängig voneinander je Wasserstoff oder $C_1$-$C_4$-Alkyl bedeuten, enthalten.

2. Herbizide Zusammensetzungen in Form von wässrigen Suspensionen von Mikrokapseln mit einer Kapselwand aus Polyharnstoff, dadurch gekennzeichnet, dass die Mikrokapseln eine Mischung eines herbizid wirksamen N-Chloracetylcyclohexenamins der Formel I

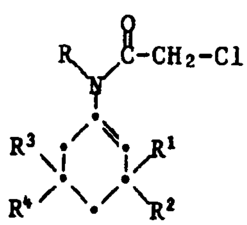

(I),

in welcher R $C_1$-$C_6$-Alkyl oder $C_3$-$C_6$-Alkenyl und $R^1$, $R^2$, $R^3$ und $R^4$ unabhängig voneinander je Wasserstoff oder $C_1$-$C_4$-Alkyl bedeuten, und eines herbizid wirksamen Chloracetanilids der Formel II

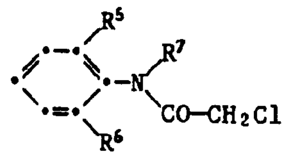

(II)

in welcher $R^5$ und $R^6$ unabhängig voneinander je Wasserstoff, Halogen, Methyl oder Ethyl, und $R^7$ $C_1$-$C_4$-Alkoxymethyl, 2-($C_1$-$C_4$-Alkoxy)-ethyl oder 2-($C_1$-$C_4$-Alkoxy)-1-methylethyl bedeutet, enthalten, wobei das Gewichtsverhältnis des N-Chloracetylcyclohexenamins der Formel I zu dem Chloracetanilids der Formel II im Bereich von 2:1 bis 1:2 liegt.

3. Herbizide Zusammensetzungen nach Anspruch 2, dadurch gekennzeichnet, dass das Gewichtsverhältnis des N-Chloracetylcyclohexenamins der Formel I zu dem Chloracetanilid der Formel II 1:1 beträgt.

4. Herbizide Zusammensetzungen nach einem der Ansprüche 1 oder 2, dadurch gekennzeichnet, dass das N-Chloracetylcyclohexenamin der Formel I aus der Gruppe N-Isopropyl-N-chloracetylcyclohex-1-enamin, N-Isopropyl-N-chloracetyl-3(5)-methylcyclohex-1-enamin, N-Isopropyl-N-chloracetyl-3,5,5(3)-trimethylcyclohex-1-enamin (Trimexachlor) und N-Isopropyl-N-chloracetyl-3,3,5,5-tetramethylcyclohex-1-enamin ausgewählt ist.

5. Herbizide Zusammensetzungen nach einem der Ansprüche 1 oder 2, dadurch gekennzeichnet, dass das N-Chloracetylcyclohexenamin der Formel I Trimexachlor ist.

6. Herbizide Zusammensetzungen nach Anspruch 2, dadurch gekennzeichnet, dass das Chloracetanilid der Formel II aus der Gruppe
N-Chloracetyl-N-ethoxymetyl-2-ethyl-6-methylanilin,
N-Chloracetyl-N-methoxymethyl-2.6-diethylanilin (Alachlor),
N-Chloracetyl-N-(2-methoxyethyl)-2.6-dimethylanilin (Dimethachlor),
N-Chloracetyl-N-(2-n-propoxyethyl)-2.6-dimethylanilin,
N-Chloracetyl-N-(2-isopropoxyethyl)-2.6-dimethylanilin,
N-Chloracetyl-N-(2-methoxyethyl)-2-ethyl-6-methylanilin,
N-Chloracetyl-N-(methoxyethyl)-2.6-diethylanilin,
N-Chloracetyl-N-(2-ethoxyethyl)-2-ethyl-6-methylanilin,
N-Chloracetyl-N-(2-methoxy-1-methylethyl)-2-methylanilin,
N-Chloracetyl-N-(2-methoxy-1-methylethyl)-2.6-dimethylanilin,
N-Chloracetyl-N-(2-methoxy-1-methylethyl)-2.6-diethylanilin,
N-Chloracetyl-N-(2-methoxy-1-methylethyl)-2-ethyl-6-methylanilin (Metolachlor),
N-Chloracetyl-N-(2-ethoxyethyl)-2.6-diethylanilin,
N-Chloracetyl-N-(2-n-propoxyethyl)-2-ethyl-6-methylanilin,
N-Chloracetyl-N-(2-propoxyethyl)-2.6-diethylanilin,
N-Chloracetyl-N-(2-isopropoxyethyl)-2-ethyl-6-methylanilin,
N-Chloracetyl-N-(2-ethoxyethyl)-2-methylanilin,
2-Chloracetyl-N-(2-methoxyethyl)-2-methylanilin,
N-Chloracetyl-N-(2-methoxy-2-methylethyl)-2.6-dimethylanilin,
N-Chloracetyl-N-(1-ethyl-2-methoxyethyl)-2.6-dimethylanilin,
N-Chloracetyl-N-(2-ethoxyethyl-1-methylethyl)-2.6-dimethylanilin,
N-Chloracetyl-N-(2-methoxyethyl)-2-chlor-6-methylanilin,
N-Chloracetyl-N-(2-ethoxyethyl)-2-chlor-6-methylanilin,
N-(n-Butoxymethyl)-N-chloracetyl-2.6-diethylanilin und
N-(2-n-Butoxyethyl)-N-chloracetyl-2.6-diethylanilin ausgewählt ist.

7. Herbizide Zusammensetzungen nach Anspruch 2, dadurch gekennzeichnet, dass sie ein Chloracetanilid der Formel II enthalten, welches bei inniger Vermischung mit einem N-Chloracetylcyclohexenamin der Formel I eine Flüssigkeit bildet.

8. Herbizide Zusammensetzungen nach Anspruch 2, dadurch gekennzeichnet, dass das Chloracetanilid der Formel II Metolachlor ist.

9. Herbizide Zusammensetzungen nach Anspruch 2, dadurch gekennzeichnet, dass die Mikrokapseln eine Mischung von N-Isopropyl-N-chloracetyl-3,5,5(3)-trimethylcyclohex-1-enamin (Trimexachlor) und N-Chloracetyl-N-(2-methoxy-1-methylethyl)-2-ethyl-6-methylanilin (Metolachlor) enthalten.

10. Herbizide Zusammensetzungen nach einem der Ansprüche 1 bis 9, dadurch gekennzeichnet, dass die Mikrokapseln zusätzlich zu einem herbizid wirksamen N-Chloracetylcyclohexenamin der Formel I oder eine Mischung eines herbizid wirksamen N-Chloracetylcyclohexenamins der Formel I und eines Chloracetanilids

der Formel II pro Gewichtsteil N-Chloracetylcyclohexenamin der Formel I oder pro Gewichtsteil der Mischung eines N-Chloracetylcyclohexenamins der Formel I und eines Chloracetanilids der Formel II 0,25-0,75 Gewichtsteile eines mit Wasser nicht mischbaren Lösungsmittels enthält.

11. Herbizide Zusammensetzungen nach einem der Ansprüche 1 bis 10, dadurch gekennzeichnet, dass die Mikrokapseln bezogen auf das eingekapselte Material einen Polymergehalt von 2,5-40 Gew.% haben.

12. Herbizide Zusammensetzungen nach einem der Ansprüche 1 bis 11, dadurch gekennzeichnet, dass sie 100-700 g Mikrokapseln pro Liter enthalten.

13. Herbizide Zusammensetzungen nach einem der Ansprüche 1 bis 12, dadurch gekennzeichnet, dass die Mikrokapseln einen Durchmesser im Bereich von 1-50 μm aufweisen.

14. Herbizide Zusammensetzungen nach einem der Ansprüche 1 bis 13, dadurch gekennzeichnet, dass die Kapselwand aus Polyharnstoff mit einem Polyamidanteil von bis zu 30 Gew.% besteht.

15. Verfahren zur Herstellung eines herbiziden Mittels gemäss einem oder mehreren der Ansprüche 1 bis 14, dadurch gekennzeichnet, dass man ein Polyisocyanat zusammen mit einer Verbindung der Formel I sowie gewünschtenfalls zusammen mit einer Verbindung der Formel II, einem Cosolvens und/oder einem Säurechlorid in wässriger Phaser dispergiert und mit einem Polyamin polymerisiert.

16. Verwendung einer herbiziden Zusammensetzung nach einem oder mehreren Ansprüchen 1 bis 14 zur Bekämpfung unerwünschten Pflanzenwuchses.

## Claims

1. A herbicidal composition in the form of an aqueous suspension of microcapsules having a capsule wall of polyurea, wherein the microcapsules encapsulate a herbicidally active N-chloroacetylcyclohexeneamine of the formula I

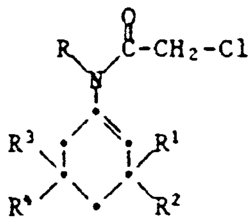

(I),

wherein R is $C_1$-$C_6$alkyl or $C_3$ -$C_6$alkenyl and $R^1$, $R^2$, $R^3$ and $R^4$ independently of each other are hydrogen or $C_1$-$C_4$alkyl.

2. A herbicidal composition in the form of an aqueous suspension of microcapsules having a capsule wall of polyurea, wherein the microcapsules encapsulate a mixture of a herbicidally active N-chloroacetylcyclohexeneamine of the formula I

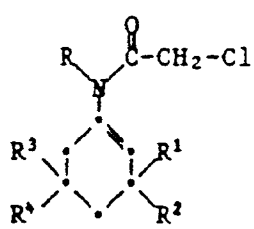

(I),

wherein R is $C_1$-$C_6$alkyl or $C_3$-$C_6$alkenyl and $R^1$, $R^2$, $R^3$ and $R^4$ independently of each other are hydrogen or $C_1$-$C_4$alkyl, and a herbicidally active chloroacetanilide of the formula II

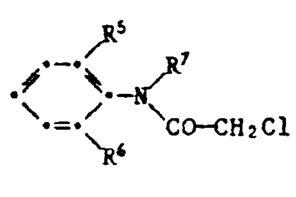

(II),

wherein $R^5$ and $R^6$ independently of each other are hydrogen, halogen, methyl or ethyl and $R^7$ represents $C_1$-$C_4$alkoxymethyl, 2-($C_1$-$C_4$alkoxy)ethyl or 2-($C_1$-$C_4$-alkoxy)-1-methylethyl, the per weight ratio of the N-chloroacetylcyclohexeneamine of the formula I to the chloroacetanilide of the formula II being within the range of 2:1 to 1:2.

3. A herbicidal composition according to claim 2, wherein the per weight ratio of the N-chloroacetylcyclohexeneamine of the formula I to the chloroacetanilide of the formula II is 1:1.

4. A herbicidal composition according to either claim 1 or claim 2, wherein the N-chloroacetylcyclohexeneamine of the formula I is selected from the group consisting of N-isopropyl-N-chloroacetylcyclohex-1-eneamine, N-isopropyl-N-chloroacetyl-3(5)-methylcyclohex-1-eneamine, N-isopropyl-N-chloroacetyl-3,5,5(3)- trimethylcyclohex-1-eneamine (trimexachlor) and N-isopropyl-N-chloroacetyl-3,3,5,5-tetramethylcyclohex-1-eneamine.

5. A herbicidal composition according to either claim 1 or claim 2, wherein the N-chloroacetylcyclohexeneamine of the formula I is trimexachlor.

6. A herbicidal composition according to claim 2, wherein the chloroacetanilide of the formula II is selected from the group consisting of
N-chloroacetyl-N-ethoxymethyl-2-ethyl-6-methylaniline,
N-chloroacetyl-N-methoxymethyl-2,6-diethylaniline (alachlor),
N-chloroacetyl-N-(2-methoxyethyl)-2,6-dimethylaniline (dimethachlor),
N-chloroacetyl-N-(2-n-propoxyethyl)-2,6-dimethylaniline,
N-chloroacetyl-N-(2-isopropoxyethyl)-2,6-dimethylaniline,
N-chloroacetyl-N-(2-methoxyethyl)-2-ethyl-6-methylaniline,
N-chloroacetyl-N-(methoxyethyl)-2,6-diethylaniline,
N-chloroacetyl-N-(2-ethoxyethyl)-2-ethyl-6-methylaniline,
N-chloroacetyl-N-(2-methoxy-1-methylethyl)-2-methylaniline,
N-chloroacetyl-N-(2-methoxy-1-methylethyl)-2,6-dimethylaniline,
N-chloroacetyl-N-(2-methoxy-1-methylethyl)-2,6-diethylaniline,
N-chloroacetyl-N-(2-methoxy-1-methylethyl)-2-ethyl-6-methylaniline (metolachlor),
N-chloroacetyl-N-(2-ethoxyethyl)-2,6-diethylaniline,
N-chloroacetyl-N-(2-n-propoxyethyl)-2-ethyl-6-methylaniline,
N-chloroacetyl-N-(2-propoxyethyl)-2,6-diethylaniline,
N-chloroacetyl-N-(2-isopropoxyethyl)-2-ethyl-6-methylaniline,
N-chloroacetyl-N-(2-ethoxyethyl)-2-methylaniline, 2-chloroacetyl-N-(2-methoxyethyl)-2-methylaniline,
N-chloroacetyl-N-(2-methoxy-2-methylethyl)-2,6-dimethylaniline,
N-chloroacetyl-N-(1-ethyl-2-methoxyethyl)-2,6-dimethylaniline,
N-chloroacetyl-N-(2-ethoxyethyl-1-methylethyl)-2,6-dimethylaniline,
N-chloroacetyl-N-(2-methoxyethyl)-2-chloro-6-methylaniline,
N-chloroacetyl-N-(2-ethoxyethyl)-2-chloro-6-methylaniline,
N-(n-butoxymethyl)-N-chloroacetyl-2,6-dimethylaniline and
N-(2-n-butoxyethyl)-N-chloroacetyl-2,6-diethylaniline.

7. A herbicidal composition according to claim 2 comprising a chloroacetanilide of the formula II which forms a liquid when it is intimately mixed with a N-chloroacetylcyclohexeneamine of the formula I.

8. A herbicidal composition according to claim 2, wherein the chloroacetanilide of the formula II is metolachlor.

9. A herbicidal composition according to claim 2, wherein the microcapsules encapsulate a mixture of N-isopropyl-N-chloroacetyl-3,5,5(3)-trimethylcyclohex-1-eneamine (trimexachlor) and N-chloroacetyl-N-(2-methoxy-1-methylethyl)-2-ethyl-6-methylaniline (metolachlor).

10. A herbicidal composition according to any one of claims 1 to 9, wherein the microcapsules encapsulate in addition to a herbicidally active N-chloroacetylcyclohexeneamine of the formula I or a mixture of a herbicidally active N-chloroacetylcyclohexeneamine of the formula I and a chloroacetanilide of the formula II 0.25-0.75 part by weight of a water-immiscible solvent per part by weight of the N-chloroacetylcyclohexeneamine of the formula I or per part by weight of the mixture of an N-chloroacetylcyclohexeneamine of the formula I and a chloroacetanilide of the formula II.

11. A herbicidal composition according to any one of claims 1 to 10, wherein the microcapsules have a polymer content of 2.5 to 40 % by weight based on the encapsulated material.

12. A herbicidal composition according to any one of claims 1 to 11 comprising 100-700 g of microcapsules per litre.

13. A herbicidal composition according to any one of claims 1 to 12, wherein the microcapsules have a diameter within the range 1 to 50 μm.

14. A herbicidal composition according to any one of claims 1 to 13, wherein the capsule wall consists of polyurea having a polyamide content of up to 30 % by weight.

15. A process for the preparation of a herbicidal composition according to one or more of claims 1 to 14, which comprises dispersing a polyisocyanate together with a compound of the formula I and, if desired, together with a compound of the formula II, with a cosolvent and/or with an acid chloride in aqueous phase and polymerising the dispersion with a polyamine.

16. The use of a herbicidal composition according to one or more of claims 1 to 14 for controlling undesired plant growth.

## Revendications

1. Compositions herbicides à l'état de suspensions aqueuses de microcapsules dont la paroi consiste en polyurée, caractérisées en ce que les microcapsules contiennent une N-chloracétylcyclohexénamine herbicide de formule I

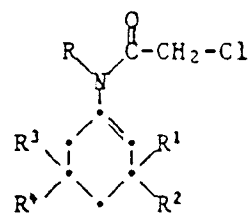

(I),

dans laquelle R représente un groupe alkyle en $C_1$-$C_6$ ou alcényle en $C_3$-$C_6$ et $R^1$, $R^2$, $R^3$ et $R^4$ représentent chacun, indépendamment les uns des autres, l'hydrogène ou un groupe alkyle en $C_1$-$C_4$.

2. Compositions herbicides à l'état de suspensions aqueuses de microcapsules dont la paroi consiste en polyurée, caractérisées en ce que les microcapsules contiennent un mélange d'une N-chloracétylcyclohexénamine herbicide de formule I

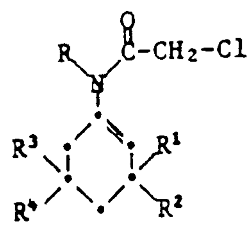

(I),

dans laquelle R représente un groupe alkyle en $C_1$-$C_6$ ou alcényle en $C_3$-$C_6$ et $R^1$, $R^2$, $R^3$ et $R^4$ représentent chacun, indépendamment les uns des autres, l'hydrogène ou un groupe alkyle en $C_1$-$C_4$, et d'un chloracétanilide herbicide de formule II

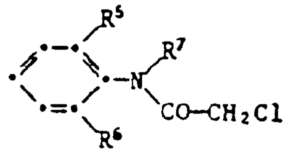

(II)

dans laquelle $R^5$ et $R^6$ représentent chacun, indépendamment l'un de l'autre, l'hydrogène, un halogène, un groupe méthyle ou éthyle, et $R^7$ représente un groupe (alcoxy en $C_1$-$C_4$)-méthyle, 2-(alcoxy en $C_1$-$C_4$)-éthyle ou 2-(alcoxy en $C_1$-$C_4$)-1-méthyléthyle, les proportions relatives en poids entre la N-chloracétylcyclohexénamine de formule I et le chloracétanilide de formule II se situant dans l'intervalle de 2 : 1 à 1 : 2.

3. Compositions herbicides selon revendication 2, caractérisées en ce que les proportions relatives en poids entre la N-chloracétylcyclohexénamine de formule I et le chloracétanilide de formule II sont de 1 : 1.

4. Compositions herbicides selon l'une des revendications 1 ou 2, caractérisées en ce que la N-chloracétylcyclohexénamine de formule I est choisie dans le groupe consistant en la N-isopropyl-N-chloracétylcyclohexa-1-énamine, la N-isopropyl-N-chloracétyl-3(5)-méthylcyclohexa-1-énamine, la N-isopropyl-N-chloracétyl-3,5,5(3)-triméthylcyclohexa-1-énamine (Trimexachlor) et la N-isopropyl-N-chloracétyl-3,3,5,5-tétraméthylcyc1ohexa-1-énamine.

5. Compositions herbicides selon l'une des revendications 1 ou 2, caractérisées en ce que la N-chloracétylcyclohexénamine de formule I est le Trimexachlor.

6. Compositions herbicides selon revendication 2, caractérisées en ce que le chloracétanilide de formule II est choisi dans le groupe consistant en les suivants :
N-chloracétyl-N-éthoxyméthyl-2-éthyl-6-méthylaniline,
N-chloracétyl-N-méthoxyméthyl-2,6-diéthylaniline (Alachlor),
N-chloracétyl-N-(2-méthoxyéthyl)-2,6-diméthylaniline (Dimetachlor),
N-chloracétyl-N-(2-n-propoxyéthyl)-2,6-diméthylaniline,
N-chloracétyl-N-(2-isopropoxyéthyl)-2,6-diméthylaniline,
N-chloracétyl-N-(2-méthoxyéthyl)-2-éthyl-6-méthylaniline,
N-chloracétyl-N-(méthoxyéthyl)-2,6-diéthylaniline,
N-chloracétyl-N-(2-éthoxyéthyl)-2-éthyl-6-méthylaniline,
N-chloracétyl-N-(2-méthoxy-1-méthyléthyl)-2-méthylaniline,
N-chloracétyl-N-(2-méthoxy-1-méthyléthyl)-2,6-diméthylaniline,
N-chloracétyl-N-(2-méthoxy-1-méthyléthyl)-2,6-diéthylaniline,
N-chloracétyl-N-(2-méthoxy-1-méthyléthyl)-2-éthyl-6-méthylaniline (Metolachlor),
N-chloracétyl-N-(2-éthoxyéthyl)-2,6-diéthylaniline,
N-chloracétyl-N-(2-n-propoxyéthyl)-2-éthyl-6-méthylaniline,
N-chloracétyl-N-(2-propoxyéthyl)-2,6-diéthylaniline,
N-chloracétyl-N-(2-isopropoxyéthyl)-2-éthyl-6-méthylaniline,
N-chloracétyl-N-(2-éthoxyéthyl)-2-méthylaniline, 2-chloracétyl-N-(2-méthoxyéthyl)-2-méthylaniline,
N-chloracétyl-N-(2-méthoxy-2-méthyléthyl)-2,6-diméthylaniline,
N-chloracétyl-N-(1-éthyl-2-méthoxyéthyl)-2,6-diméthylaniline,
N-chloracétyl-N-(2-éthoxyéthyl-1-méthyléthyl)-2,6-diméthylaniline,
N-chloracétyl-N-(2-méthoxyéthyl)-2-chloro-6-méthylaniline,
N-chloracétyl-N-(2-éthoxyéthyl)-2-chloro-6-méthylaniline,
N-(n-butoxyméthyl)-N-chloracétyl-2,6-diéthylaniline et
N-(2-n-butoxyéthyl)-N-chloracétyl-2,6-diéthylaniline.

7. Compositions herbicides selon revendication 2, caractérisées en ce qu'elles contiennent un chloracétanilide de formule II qui forme un liquide au mélange intime avec une N-chloracétylcyclohexénamine de formule I.

8. Compositions herbicides selon revendication 2, caractérisées en ce que le chloracétanilide de formule II est le Metolachlor.

9. Compositions herbicides selon la revendication 2, caractérisées en ce que les microcapsules contiennent un mélange de N-isopropyl-N-chloracétyl-3,5,5(3)-triméthylcyclohexa-1-énamine (Trimexachlor) et de N-chloracétyl-N-(2-méthoxy-1-méthyléthyl)-2-éthyl-6-méthylaniline (Metolachlor).

10. Compositions herbicides selon une des revendications 1 à 9, caractérisées en ce que les microcapsules, en plus d'une N-chloracétylcyclohexénamine herbicide de formule I ou d'un mélange d'une N-chloracétylcyclohexénamine herbicide de formule I et d'un chloracétanilide de formule II, contiennent de 0,25 à 0,75 partie en poids d'un solvant non miscible à l'eau par partie en poids de la N-chloracétylcyclohexénamine de formule I ou par partie en poids du mélange d'une N-chloracétylcyclohexénamine de formule I et d'un chloracétanilide de formule II.

11. Compositions herbicides selon une des revendications 1 à 10, caractérisées en ce que les microcapsules contiennent de 2,5 à 40% en poids de polymère par rapport à la matière encapsulée.

12. Compositions herbicides selon une des revendications 1 à 11, caractérisées en ce qu'elles contiennent de 100 à 700 g de microcapsules par litre.

13. Compositions herbicides selon une des revendications 1 à 12, caractérisées en ce que les microcapsules ont un diamètre de 1 à 50 µm.

14. Compositions herbicides selon une des revendications 1 à 13, caractérisées en ce que la paroi des capsules consiste en une polyurée à une teneur en polyamide allant jusqu'à 30% en poids.

15. Procédé de préparation d'un produit herbicide selon une ou plusieurs des revendications 1 à 14, caractérisé en ce que l'on disperse en phase aqueuse un polyisocyanate avec un composé de formule I et si on le désire, avec un composé de formule II, un solvant auxiliaire et/ou un chlorure d'acide, et on polymérise avec une polyamine.

16. Utilisation d'une composition herbicide selon une ou plusieurs des revendications 1 à 14 pour la lutte contre les croissances de végétaux indésirables.